# EUROPÄISCHE PATENTSCHRIFT

(11) **EP 1 809 462 B1**
(45) Veröffentlichungstag und Bekanntmachung des Hinweises auf die Patenterteilung: **25.08.2010**
(21) Anmeldenummer: 05797882.7
(22) Anmeldetag: 17.10.2005
(51) Int. Cl.: B29C 45/14, B29C 37/00, B05D 3/06, C09D 175/16, C08G 18/67

(54) **VERFAHREN ZUR HERSTELLUNG VON FORMTEILEN, INSBESONDERE ZUR ANWENDUNG IM AUTOMOBILBAU, UND HIERFÜR GEEIGNETE, EINE BESCHICHTUNG AUFWEISENDE FOLIEN**
METHOD FOR PRODUCING MOLDED PARTS, ESPECIALLY FOR USE IN AUTOMOBILE MANUFACTURE, AND CORRESPONDING APPROPRIATE FILMS COMPRISING A COATING
PROCEDE DE FABRICATION DE CORPS MOULES NOTAMMENT DESTINES A L'INDUSTRIE AUTOMOBILE ET PELLICULES DESTINEES A CET EFFET PRESENTANT UN REVETEMENT

(30) Priorität: 04.11.2004 DE 102004053247
(43) Veröffentlichungstag der Anmeldung: 25.07.2007
(73) Patentinhaber: BASF Coatings GmbH, 48165 Münster (DE)
(72) Erfinder: BAUMGART, Hubert, 48163 Münster (DE); RAKA, Fatmir, 48143 Münster (DE); HINTZE-BRÜNING, Horst, 48165 Münster (DE); DIETSCHE, Frank, 69198 Schriesheim (DE); SCHWALM, Reinhold, 67157 Wachenheim (DE); HEISCHKEL, Yvonne, 68199 Mannheim (DE); GRUBER, Nick, 68161 Mannheim (DE); MENZEL, Klaus, 67069 Ludwigshafen (DE); DLUGOSCH, Gabriele, 67531 Worms (DE); BECK, Erich, 68526 Ladenburg (DE); AUSTRUP, Berthold, 59394 Nordkirchen (DE)
(74) Vertreter: Leifert & Steffan
(86) Internationale Anmeldenummer: PCT/EP2005/011143
(87) Internationale Veröffentlichungsnummer: WO 2006/048109

(56) Entgegenhaltungen:
- EP-A- 0 819 516
- WO-A-00/63015

## Beschreibung

### Gebiet der Erfindung

Die vorliegende Erfindung betrifft ein Verfahren zur Herstellung von Formteilen, insbesondere zur Anwendung im Automobilbau, bei dem man
I. eine eine Beschichtung (B) aufweisende Folie (F) herstellt, indem auf eine ggf. vorbehandelte Oberfläche (T1) einer thermoplastischen Trägerfolie (T)
   1. ein pigmentiertes Beschichtungsmittel (P) aufgebracht wird,
   2. ein vernetzbares Beschichungsmittel (K), das eine radikalisch vernetzbare Komponente (KK) enthält und das nach der Endvernetzung eine transparente Beschichtung (KE) ergibt, aufgebracht wird,
   3. das in Stufe 2 aufgebrachte Beschichtungsmittel (K) getrocknet und/oder partiell vernetzt wird, wodurch eine noch nicht endvernetzte Beschichtung (KT) erzeugt wird,
II. die in Stufe I. hergestellte Folie (F) in ein geöffnetes Werkzeug einlegt,
III. das Werkzeug geschlossen, die der Oberfläche (T1) abgewandte Seite (T2) der thermoplastischen Trägerfolie (T) mit einem flüssigen oder erweichten Kunststoffmaterial (KM) in Berührung gebracht wird und sich das Kunststoffmaterial verfestigen lassen wird,
IV. das in Stufe III. erhaltene Formteil dem Werkzeug entnommen wird und
V. die Beschichtung (KT) zu einem beliebigen Zeitpunkt im Verlaufe des Verfahrens endvernetzt wird,
wobei das vernetzbare Beschichtungsmittel (K) eine radikalisch vernetzbare Komponente (KK) enthält, die
(i) ein oder mehrere Oligo- und/oder ein oder mehrere Polyurethan(meth)acrylate enthält und
(ii) im Mittel mehr als 1, vorzugsweise mindestens 2 und insbesondere mehr als 2 bis 10,0, ethylenisch ungesättigte Doppelbindungen pro Molekül,
(iii) ein zahlenmittleres Molekulargewicht von 1.000 bis 10.000 g/mol, bevorzugt von 2.000 bis 5.000 g/mol und besonders bevorzugt von 2.500 bis 3.500 g/mol,
(iv) einen Doppelbindungsgehalt von 1,0 bis 5,0 mol Doppelbindungen pro 1.000 g reaktive Komponente (KK), vorzugsweise einen Doppelbindungsgehalt von 1,5 bis 4,0 mol Doppelbindungen pro 1.000 g reaktive Komponente (KK) und besonders bevorzugt von mehr als 2,0 bis 3,5 mol Doppelbindungen pro 1.000 g reaktive Komponente (KK),
(v) im Mittel pro Molekül > 1, bevorzugt ≥ 1,4, besonders bevorzugt >2 Verzweigungspunkte,
(vi) 5- 50 Gew.-%, vorzugsweise 10 - 40 Gew.-%, besonders bevorzugt 15 - 30 Gew.-%, jeweils bezogen auf das Gewicht der Komponente (KK), cyclische Strukturelemente und
(vii) mindestens ein aliphatisches Strukturelement mit mindestens 6 C-Atomen in der Kette
aufweist.

Die vorliegende Erfindung betrifft außerdem die Verwendung der so erhältlichen Formteile und für das Verfahren geeignete, eine Beschichtung aufweisende Folien (F).

### Stand der Technik

Formteile aus einem mit einer Folie versehenen Kunststoffmaterial sind dem Fachmann bekannt. Anstelle Kunststoffbauteile mit einer Folie zu kaschieren oder zu bekleben, geht man heutzutage auch in industriellen Anwendungen verstärkt dazu über, die Folien unmittelbar im Formgebungswerkzeug mit dem Kunststoffmaterial zu hinterspritzen, hinterpressen oder hinterschäumen (A. Grefenstein, "Folienhinterspritzen statt Lackieren, Neue Technik für Karosseriebauteile aus Kunststoff" in Metalloberfläche, 10/99, 53. Jahrgang, Carl Hanser Verlag, München, 1999).

Die zur Herstellung der Formteile eingesetzten mehrschichtigen, farb- und/oder effektgebenden Folien umfassen bekanntermaßen eine Trägerfolie, mindestens eine farb- und/oder effektgebende Basislackierung und eine Klarlackierung. Sie entsprechen in ihrem Aufbau den herkömmlichen farb- und/oder effektgebenden Mehrschichtlackierungen.

Insbesondere im Bereich der Automobillackierung wird aber an das Erscheinungsbild der folienseitigen Oberflächen der Formteile eine Vielzahl von Anforderungen gestellt (vgl. z. B. das Europäische Patent EP 0 352 298 B1, Seite 15, Zeile 42 bis Seite 17, Zeile 40).

Mit den im Stand der Technik vorgeschlagenen Lösungen können diese im Bereich der Automobillackierung üblichen Anforderungen aber nur unzureichend erfüllt werden. Außerdem sind die im Stand der Technik vorgeschlagenen Lösungen zum Teil im Hinblick auf den für die verwendeten strahlenvernetzbaren Klarlacke einzustellenden Wert der Glasübergangstemperatur sogar widersprüchlich.

So ist aus der WO 00/63015 ein Verfahren der eingangs genannten Art zur Herstellung von Formteilen bekannt, bei dem das vernetzbare Beschichtungsmittel (K) aus einer strahlenvernetzbaren Masse besteht, die ein Bindemittel mit einer Glasübergangstemperatur oberhalb 40 ° C enthält. Die bei diesem Verfahren erhaltenen endvernetzten transparenten Beschichtungen (KE) weisen jedoch unbefriedigende Eigenschaften auf. Insbesondere wird eine unzureichende Vernetzung der transparenten Beschichtung (KE) erhalten.

Darüber hinaus werden bei dem in der WO 00/63015 beschriebenen Verfahren als pigmentiertes Beschichtungsmittel thermoplastische Polymere, die Farbstoffe oder Pigmente in der Polymerschicht verteilt enthalten, eingesetzt. Aufgebracht wird diese farbgebende Schicht durch Extrusion, während die Verwendung von lösemittelhaltigen oder wäßrigen, pigmentierten Beschichtungsmitteln und deren Applikationsverfahren nicht beschrieben sind.

Weiterhin ist aus der EP-A-819 516 ein Verfahren zur Herstellung von Formteilen bekannt, bei dem eine mit einer Beschichtung versehene Folie in ein Formwerkzeug eingelegt, das Formwerkzeug geschlossen und mit einem Kunststoffmaterial (KM) in Berührung gebracht und das Kunststoffmaterial (KM) verfestigt wird, wobei das Verfahren dadurch gekennzeichnet ist, dass das Beschichtungsmaterial vor dem Einbringen des Kunststoffmaterials nur teilvernetzt und erst während und/oder nach dem Einbringen des Kunststoffmaterials (KM) endvernetzt wird. Bevorzugt werden bei dem Verfahren strahlenvernetzbare Beschichtungsmittel mit einer Glasübergangstemperatur unterhalb 40 ° C, insbesondere auf Basis von Urethanen, eingesetzt. Nähere Angaben zu der Zusammensetzung geeigneter Beschichtungsmittel sind jedoch nicht enthalten.

Ferner ist aus der EP-B-403 573 eine mit einer Beschichtung versehene Folie für die Verwendung im Thermoverformungsverfahren beschrieben, wobei es wesentlich ist, dass ein unvemetzter bzw. gering vernetzter Klarlack mit einer Glasübergangstemperatur unterhalb 20°C zumindest einen Teil der Klarlackschicht bildet.

Schließlich sind aus der EP-B-1 144 476 sowohl durch thermische Addition als auch durch strahlungsinduzierte Addition härtbare, sogenannte Dual Cure, Beschichtungsmittel und ihre Verwendung für die Herstellung von tiefziehfähigen Lackfolien bekannt. Die dort beschriebenen Beschichtungsmittel enthalten aber für die thermische Härtung erforderliche freie Isocyanatgruppen. Die Beschichtungsmittel weisen also eine stofflich aufwändigere Zusammensetzung auf. Außerdem ist die Prozeßsteuerung schwierig, um eine unkontrollierte Aushärtung der thermisch reaktiven Bestandteile während der thermischen Prozeßschritte, wie z.B. dem Tiefziehen bei erhöhter Temperatur, zu vermeiden.

### Aufgabe

Der vorliegenden Erfindung lag daher die Aufgabe zugrunde, ein Verfahren zur Herstellung von Formteilen zur Verfügung zu stellen, bei dem einerseits eine ausreichende Vernetzung der Beschichtungsmittel (K) gewährleistet ist. Andererseits darf aber auch die noch nicht endvernetzte Beschichtung (KT) nicht mehr fließen und durch eine ggf. aufgebrachte Schutzfolie nicht geprägt werden.

So sollen insbesondere bei Verwendung der Formteile in der Automobilindustrie die Formteile in ihrem folienseitigen Erscheinungsbild den Anforderungen an eine sogenannte Class-A-Oberfläche genügen.

Außerdem sollen die Formteile in ihrem folienseitigen Erscheinungsbild die üblicherweise an eine Automobillackierung gestellten Anforderungen erfüllen (vgl. das Europäische Patent EP 0 352 298 B1, Seite 15, Zeile 42 bis Seite 17, Zeile 40). So darf insbesondere sowohl die Witterungsbeständigkeit als auch die Chemikalienbeständigkeit der endvernetzten transparenten Beschichtung (KE) nicht schlechter sein als die herkömmlicher Automobilklarlackschichten. Schließlich sollte die endvernetzte Beschichtung (KE) auch eine ausreichende Kratzfestigkeit aufweisen.

### Lösung der Aufgabe

Diese Aufgabe wird überraschenderweise durch ein Verfahren der eingangs genannten Art gelöst, das dadurch gekennzeichnet ist, dass die radikalisch vernetzbare Komponente (KK) H-Brücken bildende Strukturelemente in einer solchen Menge aufweist, dass
1. eine aus der Mischung (M) hergestellte, noch nicht endvernetzte transparente Beschichtung (MT) ein Verhältnis von Speichermodul G(MT)' zu Verlustmodul G(MT)" von 5 bis 200 , bevorzugt von 8 bis 100, besonders bevorzugt von 10 bis 80, aufweist, wobei G(MT)' und G(MT)" bei einer Temperatur von 20 °C durch rheologische Oszillationsmessungen mit Hilfe eines Platte-Platte-Messsystems bei einer Heizrate von 2°C pro Minute und einer Kreisfrequenz von 10 s⁻¹ gemessen worden sind, und
2. eine aus der Mischung (M) hergestellte, endvernetzte transparente Beschichtung (ME) ein Speichermodul E(ME)' von 1,0* 10^{7,0} bis 8,0 * 10^{7,0} Pa, bevorzugt von 1,5* 10^{7,0} bis 4,5*10^{7,0} Pa, besonders bevorzugt von 1,9 * 10^{7,0} bis 3,7*10^{7,0} Pa, aufweist, wobei E(ME)' im gummielastischen Bereich an freien endvernetzten Filmen mit einer Schichtdicke von 40 µm +/-10 µm mit der Dynamisch-Mechanischen-Thermo-Analyse bei einer Heizrate von 2°C pro Minute und einer Frequenz von 1 Hz gemessen worden ist,
wobei die Mischung (M) durch Mischen von
100 Teilen der Komponente (KK), 70%ig in Methylethylketon, (entsprechend 143 Teilen der 70%igen Lösung) mit
2,4 Teilen 1-Hydroxy-cyclohexyl-phenyl-keton, eingesetzt in Form von 3,0 Teilen einer 80%igen Lösung in Aceton und
0,8 Teilen Ethyl-2,4,6-Trimethylbenzoylphenylphosphinat sowie
1,0 Teilen einer Mischung aus Bis(1,2,2,6,6-pentamethyl-4-piperidinyl)sebacat und Methyl(1,2,2,6,6-pentamethyl-4-piperidinyl)sebacat
2,0 Teilen einer Mischung aus 2-(4-((2-Hydroxy-3-tridecyloxypropyl)-oxy)-2-hydroxyphenyl)-4,6-bis(2,4-dimethylphenyl)-1,3,5-triazin und 2-(4-((2-Hydroxy-3-dodecyloxypropyl)oxy)-2-hydroxyphenyl)-4,6-bis(2,4-dimethylphenyl)-1,3,5-triazin, eingesetzt in Form von 2,4 Teilen einer 85%igen Lösung in 1-Methoxy-2-propanol
0,2 Teilen eines polyethermodifizierten Polydimethylsiloxans, eingesetzt in Form von 1,7 Teilen einer Lösung des Polydimethylsiloxans in Xylol/Monophenylglykol 7/2 mit einem nichtflüchtigen Anteil von 12,5% und
70,0 Teilen 3-Butoxy-2-propanol
erhalten wurde.

Gegenstand der vorliegenden Erfindung sind außerdem auch die in dem Verfahren eingesetzten, eine Beschichtung (B) aufweisenden Folien (F) sowie die mit der Folie (F) versehenen Formteile und deren Verwendung.

### Vorteile der Erfindung

Es ist überraschend und war nicht vorhersehbar, dass durch Verwendung der speziellen Komponente (KK) in den vernetzbaren Beschichtungsmitteln (K) Beschichtungen erhalten werden, bei denen einerseits die noch nicht endvernetzte Beschichtung (KT) nicht mehr fließt und durch eine ggf. aufgebrachte Schutzfolie nicht geprägt wird und andererseits bei der Endhärtung eine ausreichende Vernetzung der Beschichtungsmittel (K) gegeben ist.

Geeignete spezielle radikalisch vernetzbare Komponenten (KK) können dabei über Steuerung des H-Brückengehaltes bereit gestellt werden.

Mit dem erfindungsgemäßen Verfahren werden somit Formteile zur Verfügung gestellt, die in ihrem folienseitigen Erscheinungsbild Class-A-Oberflächen gewährleisten und die die üblicherweise an eine Automobillackierung gestellten Anforderungen erfüllen (vgl. das Europäische Patent EP 0 352 298 B1, Seite 15, Zeile 42 bis Seite 17, Zeile 40). So ist insbesondere sowohl die Witterungsbeständigkeit als auch die Chemikalienbeständigkeit der endvernetzten transparenten Beschichtung (KE) nicht schlechter als die herkömmlicher Automobilklarlackschichten. Schließlich weist die endvernetzte Beschichtung (KE) auch eine ausreichende Kratzfestigkeit auf.

### Ausführliche Beschreibung der Erfindung

### Die bei dem erfindungsgemäßen Verfahren eingesetzten Materialien

### Die eine Beschichtung (B) aufweisende Folie (F)

### Vernetzbares Beschichtungsmittel (K)

Es ist überraschend und war nicht vorhersehbar, dass nur durch die Messung der viskoelastischen Eigenschaften mittels rheologischer Messungen im Falle der noch nicht endvernetzten Beschichtung (MT) bzw. mittels der Dynamisch-Mechanischen Thermo-Analyse (im Folgenden auch kurz DMTA genannt) an freien Filmen im Falle der endvernetzten Beschichtung (ME) ein universelles, repräsentatives Auswahlkriterium für die Bereitstellung von radikalisch vernetzbaren Komponenten (KK) und dadurch auch von geeigneten vernetzbaren Beschichtungsmitteln (K) zur Verfügung steht, mit dessen Hilfe Beschichtungen mit den gewünschten Eigenschaften zur Verfügung gestellt werden.

Es ist daher erfindungswesentlich, dass
1. eine aus der Mischung (M) hergestellte, noch nicht endvernetzte transparente Beschichtung (MT) ein Verhältnis von Speichermodul G(MT)' zu Verlustmodul G(MT)" von 5 bis 200 , bevorzugt von 8 bis 100, besonders bevorzugt von 10 bis 80, aufweist, wobei G(MT)' und G(MT)" bei einer Temperatur von 20 °C durch rheologische Oszillationsmessungen mit Hilfe eines Platte-Platte-Messsystems bei einer Heizrate von 2°C pro Minute und einer Kreisfrequenz von 10 s⁻¹ gemessen worden sind, und
2. eine aus der Mischung (M) hergestellte, endvernetzte transparente Beschichtung (ME) ein Speichermodul E(ME)' von 1,0* 10^{7,0} bis 8,0 *10^{7,0} Pa, bevorzugt von 1,5 * 10^{7,0} bis 4,5 *10^{7,0} Pa, besonders bevorzugt von 1,9* 10^{7,0} bis 3,7* 10^{7,0} Pa, aufweist, wobei E(ME)' im gummielastischen Bereich an freien endvernetzten Filmen mit einer Schichtdicke von 40 µm +/-10 µm mit der Dynamisch-Mechanischen-Thermo-Analyse bei einer Heizrate von 2°C pro Minute und einer Frequenz von 1 Hz gemessen worden ist.

Rheologische Oszillationsmessungen mit dem Platte-Platte-Messsystem sind allgemein zur Bestimmung der viskoelastischen Eigenschaften von Beschichtungsmitteln bekannt und beispielsweise beschrieben in Thomas Mezger, Das Rheologie Handbuch, Vincentz Verlag, ISBN 3-87870-567-0, Seiten 208 bis 212.

Die Durchführung der Messungen kann beispielsweise mit dem Gerät MCR 300 der Firma Physica (Platte-Platte-Messsystem, 25 mm Durchmesser) mit einer Kreisfrequenz von 10s⁻¹ und einer Amplitude von 0,1% erfolgen.

Die Heizrate beträgt bei den rheologischen Messungen 2°C pro Minute.

Das Verhältnis von Speichermodul G(MT)' zu Verlustmodul G(MT)" wird an aus der Mischung (M) hergestellten, getrockneten, aber noch nicht endvernetzten Beschichtungen (MT) gemessen. Diese getrockneten, aber noch nicht endvernetzten Beschichtungen (MT) werden in bekannter Weise dadurch hergestellt, dass 100 Teile der Komponente (KK), 70%ig in Methylethylketon (entsprechend 143 Teilen der 70%igen Lösung), mit 2,4 Teilen 1-Hydroxy-cyclohexyl-phenyl-keton (insbesondere Handelsprodukt Irgacure ® 184 der Firma Ciba Geigy), eingesetzt in Form von 3,0 Teilen einer 80%igen Lösung in Aceton, und 0,8 Teilen Ethyl-2,4,6-Trimethylbenzoylphenyl-phosphinat (insbesondere Handelsprodukt Lucirin ® TPO L der Firma BASF AG) sowie 1,0 Teilen einer Mischung aus Bis(1,2,2,6,6-pentamethyl-4-piperidinyl)sebacat und Methyl(1,2,2,6,6-pentamethyl-4-piperidinyl)sebacat (insbesondere Handelsprodukt Tinuvin® 292 der Firma Ciba Geigy), 2,0 Teilen einer Mischung aus 2-(4-((2-Hydroxy-3-tridecyloxypropyl)oxy)-2-hydroxyphenyl)-4,6-bis(2,4-dimethylphenyl)-1,3,5-triazin und 2-(4-((2-Hydroxy-3-dodecyloxypropyl)oxy)-2-hydroxyphenyl)-4,6-bis(2,4-dimethylphenyl)-1,3,5-triazin (eingesetzt in Form von 2,4 Teilen einer handelsüblichen 85%igen Lösung in 1-Methoxy-2-propanol, insbesondere Handelsprodukt Tinuvin® 400 der Firma Ciba Geigy), 0,2 Teilen eines polyethermodifizierten Polydimethylsiloxans, eingesetzt in Form von 1,7 Teilen einer Lösung des Polydimethylsiloxans in Xylol/Monophenylglykol 7/2 mit einem nichtflüchtigen Anteil von 12,5% (insbesondere Handelsprodukt Byk® 306 der Firma Byk Chemie) in 3-Butoxy-2-propanol gelöst und mit 3-Butoxy-2-propanol auf einen Festkörpergehalt von 48% eingestellt wird.

Die so erhaltene Mischung (M) wird unter Ausschluß von UV-Licht mit dem Linecoater der Firma Coatema GmbH, Dormagen, mittels Kastenrakel einer Breite von 37 cm mit einer Naßschichtdicke von 200 µm auf eine Polyethylenterephthalatfolie aufgerakelt. Die beschichtete Folie fährt dann mit einer Geschwindigkeit von 0,2 m/min in einen Flash-Off-Kanal und verweilt dort für 20 Minuten bei einer Temperatur von 25 °C und einer relativen Luftfeuchte von 65 %. Anschließend wird die beschichtete Folie für 15 Minuten in einem Ofen bei einer Lufttemperatur im Ofen von 119 °C getrocknet. Der getrocknete Lackfilm wird danach von der beschichteten Folie mit einem Schaber abgeschabt und zur rheologischen Prüfung gegeben.

Die Dynamisch-Mechanische Thermo-Analyse ist eine allgemein bekannte Messmethode zur Bestimmung der viskoelastischen Eigenschaften von Beschichtungen und beispielsweise beschrieben in Murayama, T., Dynamic Mechanical Analysis of Polymeric Material, Esevier, New York, 1978 und Loren W. Hill, Journal of Coatings Technology, Vol. 64, No. 808, May 1992, Seiten 31 bis 33.

Die Durchführung der Messungen kann beispielsweise mit dem Gerät DMTA V der Firma Rheometrics Scientific mit einer Frequenz von 1 Hz und einer Amplitude von 0,2% erfolgen.

Der Speichermodul E' wird im gummielastischen Bereich an homogenen freien endvernetzten Filmen gemessen. Die freien Filme werden in bekannter Weise dadurch hergestellt, dass 100 Teile der Komponente (KK), 70%ig in Methylethylketon (entsprechend 143 Teilen der 70%igen Lösung), mit 2,4 Teilen 1-Hydroxy-cyclohexyl-phenyl-keton (insbesondere Handelsprodukt Irgacure ® 184 der Firma Ciba Geigy), eingesetzt in Form von 3,0 Teilen einer 80%igen Lösung in Aceton, und 0,8 Teilen Ethyl-2,4,6-Trimethylbenzoylphenyl-phosphinat (insbesondere Handelsprodukt Lucirin ® TPO L der Firma BASF AG) sowie 1,0 Teilen einer Mischung aus Bis(1,2,2,6,6-pentamethyl-4-piperidinyl)sebacat und Methyl(1,2,2,6,6-pentamethyl-4-piperidinyl)sebacat (insbesondere Handelsprodukt Tinuvin® 292 der Firma Ciba Geigy), 2,0 Teilen einer Mischung aus 2-(4-((2-Hydroxy-3-tridecyloxypropyl)oxy)-2-hydroxyphenyl)-4,6-bis(2,4-dimethylphenyl)-1,3,5-triazin und 2-(4-((2-Hydroxy-3-dodecyloxypropyl)oxy)-2-hydroxyphenyl)-4,6-bis(2,4-dimethylphenyl)-1,3,5-triazin (eingesetzt in Form von 2,4 Teilen einer handelsüblichen 85%igen Lösung in 1-Methoxy-2-propanol, insbesondere Handelsprodukt Tinuvin® 400 der Firma Ciba Geigy), 0,2 Teilen eines polyethermodifizierten Polydimethylsiloxans, eingesetzt in Form von 1,7 Teilen einer Lösung des Polydimethylsiloxans in Xylol/Monophenylglykol 7/2 mit einem nichtflüchtigen Anteil von 12,5% (insbesondere Handelsprodukt Byk® 306 der Firma Byk Chemie) in 3-Butoxy-2-propanol gelöst und mit 3-Butoxy-2-propanol auf einen Festkörpergehalt von 48% eingestellt wird.

Die so erhaltene Mischung (M) wird auf Substraten, auf denen die erhaltene Beschichtung nicht haftet, appliziert. Als Beispiele für geeignete Substrate seien Glas, Teflon, Polyethylenterephthalat und Polypropylen, insbesondere Polypropylen, genannt. Die so erhaltene Beschichtung wird wie bei den rheologischen Messungen beschrieben, getrocknet und anschließend unter Verwendung von UV-Licht mit einer Dosis von 1,9 J/cm² unter Inertbedingungen mit einem Restsauerstoffgehalt von 200 ppm endvernetzt. Eingesetzt wurde eine IST-Bandanlage mit einer Hg-Hochdrucklampe und dem Dosimeter Light Bug IL 390C.

Die Schichtdicke der zur Messung eingesetzten freien Filme beträgt dabei im Allgemeinen 40 ± 10 µm. Die Heizrate beträgt dabei 2°C pro Minute.

Überraschenderweise wurde gefunden, dass Formteile in ihrem folienseitigen Erscheinungsbild mit den gewünschten Eigenschaften dann erhalten werden, wenn das Beschichtungsmittel (K) eine radikalisch vernetzbare Komponente (KK) enthält, die derart ausgewählt wird, dass die aus der Mischung (M) hergestellte, noch nicht endvernetzte transparente Beschichtung (MT) und die aus der Mischung (M) hergestellte, endvernetzte transparente Beschichtung (ME) ganz bestimmte Werte des Verhältnisses aus Speichermodul G(MT)' zu Verlustmodul G(MT)" bzw. ganz bestimmte Werte des Speichermoduls E(ME)' aufweisen.

Mit anderen Worten ausgedrückt, kann der Fachmann für das erfindungsgemäße Verfahren geeignete Beschichtungsmittel (K) dadurch erhalten, dass er eine reaktive Komponente (KK) verwendet, die die angegebenen Parameter (i) bis (vii) sowie einen genau definierten Gehalt an H-Brücken-bildenden Strukturelementen aufweist. Aus dieser Komponente (KK) stellt er dann - wie oben unter dem Punkt Lösung der Aufgabe beschrieben - jeweils die Mischung (M) durch Zusatz der angegebenen Mengen genau definierter Additive und Lösemittel her und bestimmt mit Hilfe genau beschriebener Messungen aus den erhaltenen noch nicht endvernetzten Beschichtungen (MT) sowie den erhaltenen endvernetzten Beschichtungen (ME) die angegebenen viskoelastischen Kenngrößen.

Wie aus der nachfolgenden Beschreibung der Zusammensetzung des Beschichtungsmittels (K) ersichtlich ist, kann diese Mischung (M) auch direkt als Beschichtungsmittel (K) verwendet werden. Es ist aber selbstverständlich - wie unten detailliert ausgeführt - auch möglich, das Beschichtungsmittel (K) unter Verwendung dieser für die Mischung (M) verwendeten Komponente (KK), aber unter Verwendung z.B. anderer Photoinitiatoren und/oder Additive und/oder Lösemittel und/oder anderer Bestandteile herzustellen.

Dabei ist die Widerstandsfähigkeit der Folie mit der noch nicht endvernetzten transparenten Beschichtung (KT) während Folienverarbeitung im Allgemeinen dann besonders hoch (Widerstandsfähigkeit bedeutet, dass einerseits die noch nicht endvernetzte Beschichtung (KT) nicht mehr fließt und durch eine ggf. aufgebrachte Schutzfolie nicht geprägt wird), wenn das Verhältnis von Speichermodul G(MT)' zu Verlustmodul G(MT)" bei einer Temperatur von 20 °C der getrockneten, aber noch nicht endvernetzten transparenten Beschichtung (MT) möglichst hoch ist.

Wenn das Verhältnis von Speichermodul G(MT)' zu Verlustmodul G(MT)" bei einer Temperatur von 20 °C der getrockneten, aber noch nicht endvernetzten transparenten Beschichtung (MT) dagegen möglichst niedrig ist, dann ist die Beweglichkeit der Reaktanten bei der Endvernetzung besonders hoch und damit bei gegebener Funktionalität und bei gegebener Menge an Doppelbindungen pro Molekül eine gute Vernetzungsdichte der endvernetzten Beschichtung (KE) erzielbar.

Darüber hinaus nimmt im Allgemeinen die Kratzfestigkeit der endvernetzten transparenten Beschichtung (KE) mit steigendem Speichermodul E(ME)' der endvernetzten transparenten Beschichtung (ME) im gummielastischen Bereich zu.

Bei einem zu hohen Speichermodul E(ME)' der endvernetzten transparenten Beschichtung (ME) im gummielastischen Bereich wird allerdings die endvernetzte transparente Beschichtung zu spröde. Dann weist die endvernetzte transparente Beschichtung (KE) eine erhöhte Tendenz zu Spannungsrissen nach der UV-Härtung auf.

Die genannten viskoelastischen Kenngrößen, nämlich der Speichermodul und der Verlustmodul der noch nicht endvernetzten transparenten Beschichtung (MT) sowie der Speichermodul der endvernetzten transparenten Beschichtung (ME), sind durch strukturelle Parameter der vernetzbaren Komponente (KK) steuerbar. So haben z. B. der Doppelbindungsgehalt, das Molekulargewicht, das Doppelbindungsäquivalentgewicht, Art und Menge von starren Struktureinheiten sowie der Gehalt an H-Brücken ausbildenden Struktureinheiten Einfluss auf die genannten viskoelastischen Kenngrößen.

Es ist daher zunächst wesentlich, dass die im vernetzbaren Beschichtungsmittel (K) enthaltene radikalisch vernetzbare Komponente (KK) ein oder mehrere Oligourethan(meth)acrylate und/oder ein oder mehrere Polyurethan(meth)acrylate enthält.

Hier und im Folgenden wird dabei unter einem Oligomer eine Verbindung verstanden, welche im Allgemeinen im Mittel 2 bis 10 Grundstrukturen oder Monomereinheiten aufweist. Unter einem Polymeren wird dagegen eine Verbindung verstanden, welche im Allgemeinen im Mittel mehr als 10 Grundstrukturen oder Monomereinheiten aufweist. Mischungen bzw. stoffliche Gesamtheiten dieser Art werden von der Fachwelt auch als Bindemittel oder Harze bezeichnet.

Im Unterschied dazu ist hier und im Folgenden unter einer niedermolekularen Verbindung eine Verbindung zu verstehen, welche sich im Wesentlichen nur von einer Grundstruktur oder einer Monomereinheit ableitet.

Bevorzugt enthält die radikalisch vernetzbare Komponente (KK) mindestens 50 Gew.-%, besonders bevorzugt mindestens 70 Gew.-% und ganz besonders bevorzugt mindestens 80 Gew.-%, jeweils bezogen auf den Festkörpergehalt der Komponente (KK), eines oder mehrerer Oligourethan(meth)acrylate und/oder eines oder mehrerer Polyurethan-(meth)acrylate. Insbesondere besteht die radikalisch vernetzbare Komponente zu 100% aus einem oder mehreren Oligourethan(meth)-acrylaten und/oder einem oder mehreren Polyurethan(meth)acrylaten.

Bevorzugt enthält die radikalisch vernetzbare Komponente (KK) außerdem maximal 50 Gew.-%, besonders bevorzugt maximal 30 Gew.-% und ganz besonders bevorzugt maximal 20 und insbesondere keine weiteren radikalisch vernetzbaren Bestandteile.

Bevorzugt enthält dabei die radikalisch vernetzbare Komponente (KK) weniger als 5 Gew.-%, bevorzugt weniger als 1 Gew.-%, jeweils bezogen auf das Gewicht der Komponente (KK), und insbesondere im wesentlichen keine nachweisbaren, freien Isocyanatgruppen.

Außerdem ist es bevorzugt, dass die im vernetzbaren Beschichtungsmittel (K) enthaltene radikalisch vernetzbare Komponente (KK) eine Mischung verschiedener Oligo- und/oder Polyurethan(meth)acrylate, die auch unterschiedliche Doppelbindungsgehalte, Molekulargewichte, Doppelbindungsäquivalentgewichte, Gehalt an Verzweigungspunkten und Gehalt an cyclischen sowie längerkettigen aliphatischen Strukturelementen und unterschiedlichen Gehalt an H-Brücken bildenden Strukturen aufweisen können, enthält. Entscheidend ist dabei, dass die Komponente (KK) im Mittel die nachfolgend angegebenen Werte für die Parameter aufweist.

Diese Mischung kann dabei dadurch erhalten werden, dass unterschiedliche Oligo- bzw. Polyurethan(meth)acrylate gemischt werden, oder dass bei der Herstellung eines entsprechenden Oligo- bzw. Polyurethan(meth)acrylates gleichzeitig unterschiedliche Produkte entstehen.

Neben den Urethan(meth)acrylaten kommen als weitere radikalisch vernetzbare Bestandteile der Komponente (KK) Monomere, bevorzugt aber Oligomere und/oder Polymere, insbesondere Polyester(meth)-acrylate, Epoxy(meth)acrylate, (meth)acrylfunktionelle (Meth)Acrylcopolymere, Polyether(meth)acrylate, ungesättigte Polyester, Amino-(meth)acrylate, Melamin(meth)acrylate und/oder Silikon(meth)acrylate , bevorzugt Polyester(meth)acrylate und/oder Epoxy(meth)acrylate und/oder Polyether(meth)acrylate, in Betracht.

Zur Erzielung einer guten Vernetzung werden bevorzugt radikalisch vernetzbare Komponenten (KK) mit einer hohen Reaktivität der funktionellen Gruppen eingesetzt, besonders bevorzugt radikalisch vernetzbare Komponenten (KK), die als funktionelle Gruppen acrylische Doppelbindungen enthalten.

Die Urethan(meth)acrylate können in dem Fachmann bekannter Weise aus isocyanatgruppenhaltiger Verbindung und mindestens einer Verbindung, die gegenüber Isocyanatgruppen reaktive Gruppen enthält, durch Mischen der Komponenten in beliebiger Reihenfolge, gegebenenfalls bei erhöhter Temperatur, hergestellt werden.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Insbesondere werden die Urethan(meth)acrylate erhalten, indem das Di- oder Polyisocyanat vorgelegt wird und daraufhin mindestens ein Hydroxyalkyl(meth)acrylat oder Hydroxyalkylester anderer ethylenisch ungesättigter Carbonsäuren zugegeben wird, wodurch zunächst ein Teil der Isocyanatgruppen umgesetzt wird. Nachfolgend wird ein Kettenverlängerungsmittel aus der Gruppe der Diole/Polyole und/oder Diamine/Polyamine und/oder Dithiole/Polythiole und/oder Alkanolamine zugegeben und so die restlichen Isocyanatgruppen mit dem Kettenverlängerungsmittel umgesetzt.

Außerdem ist es möglich, die Urethan(meth)acrylate herzustellen durch Umsetzung eines Di- oder Polyisocyanates mit einem Kettenverlängerungsmittel und anschließende Umsetzung der restlichen freien Isocyanatgruppen mit mindestens einem ethylenisch ungesättigten Hydroxyalkylester.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend kann ein weiterer Teil der Isocyanatgruppen mit dem ethylenisch ungesättigten Hydroxyalkylester und im Anschluß hieran können die restlichen Isocyanatgruppen mit einem Diamin umgesetzt werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet. Wasserfrei bedeutet dabei, daß der Wassergehalt im Reaktionssystem nicht mehr als 5 Gew.-% beträgt, bevorzugt nicht mehr als 3 Gew.-% und besonders bevorzugt nicht mehr als 1 Gew.-%.

Um eine Polymerisation der polymerisationsfähigen Doppelbindungen zurückzudrängen, wird bevorzugt unter einem sauerstoffhaltigen Gas gearbeitet, besonders bevorzugt Luft oder Luft-Stickstoff-Gemische.

Als sauerstoffhaltiges Gas können bevorzugt Luft oder ein Gemisch aus Sauerstoff oder Luft und einem unter den Einsatzbedingungen inerten Gas verwendet werden. Als inertes Gas können Stickstoff, Helium, Argon, Kohlenmonoxid, Kohlendioxid, Wasserdampf, niedere Kohlenwasserstoffe oder deren Gemische verwendet werden.

Der Sauerstoffgehalt des sauerstoffhaltigen Gases kann beispielsweise zwischen 0,1 und 22 Vol.-%, bevorzugt von 0,5 bis 20 betragen, besonders bevorzugt 1 bis 15, ganz besonders bevorzugt 2 bis 10 und insbesondere 4 bis 10 Vol.-%. Selbstverständlich können, falls gewünscht, auch höhere Sauerstoffgehalte eingesetzt werden.

Die Reaktion kann auch in Gegenwart eines inerten Solvens durchgeführt werden, z.B. Aceton, *Iso*-butyl-methylketon, Methylethylketon, Toluol, Xylol, Butylacetat oder Ethoxyethylacetat.

Durch Auswahl der Art und Menge an eingesetztem Di- und/oder Polyisocyanat, Kettenverlängerungsmittel und Hydroxyalkylester werden dabei die weiteren Kenngrößen der Urethan(meth)acrylate, wie z. B. Doppelbindungsgehalt, Doppelbindungsäquivalentgewicht, Gehalt an Verzweigungspunkten, Gehalt an cyclischen Strukturelementen, Gehalt an aliphatischen Strukturelementen mit mindestens 6 C-Atomen , Gehalt an H-Brücken bildenden Strukturelementen u. ä. gesteuert.

Durch die Auswahl der jeweils eingesetzten Mengen an Di- oder Polyisocyanat und Kettenverlängerungsmittel sowie durch die Funktionalität des Kettenverlängerungsmittels ist es ferner auch möglich, Urethan(meth)acrylate herzustellen, die neben den ethylenisch ungesättigten Doppelbindungen noch andere funktionelle Gruppen, beispielsweise Hydroxyl-, Carboxylgruppen, Aminogruppen und/oder Thiolgruppen o.ä. enthalten. Bevorzugt enthalten dabei die Urethan(meth)acrylate noch Hydroxyl- und/oder Carboxylgruppen.

Insbesondere, wenn die Urethan(meth)acrylate in wässrigen Beschichtungsmitteln (K) eingesetzt werden sollen, wird ein Teil der in den Reaktionsgemischen vorhandenen freien Isocyanatgruppen noch mit Verbindungen umgesetzt, die eine isocyanatreaktive Gruppe, vorzugsweise ausgewählt aus der Gruppe, bestehend aus Hydroxyl-, Thiol- und primären und sekundären Aminogruppen, insbesondere Hydroxylgruppen, sowie mindestens eine, insbesondere eine, Säuregruppe, vorzugsweise ausgewählt aus der Gruppe bestehend aus Carboxylgruppen, Sulfonsäuregruppen, Phosphorsäuregruppen und Phosphonsäuregruppen, insbesondere Carboxylgruppen, enthalten. Beispiele geeigneter Verbindungen dieser Art sind Hydroxyessigsäure, Hydroxypropionsäure oder Gamma-Hydroxybuttersäure, insbesondere Hydroxyessigsäure.

Die neben den Urethan(meth)acrylaten geeigneten Polyester(meth)-acrylate sind dem Fachmann prinzipiell bekannt. Sie sind durch verschiedene Methoden herstellbar. Beispielsweise kann Acrylsäure und/- oder Methacrylsäure direkt als Säurekomponente beim Aufbau der Polyester eingesetzt werden. Daneben besteht die Möglichkeit, Hydroxyalkylester der (Meth)Acrylsäure als Alkoholkomponente direkt beim Aufbau der Polyester einzusetzen. Bevorzugt werden die Polyester-(meth)acrylate aber durch Acrylierung von Polyestern hergestellt. Beispielsweise können zunächst hydroxylgruppenhaltige Polyester aufgebaut werden, die dann mit Acryl- oder Methacrylsäure umgesetzt werden. Es können auch zunächst carboxylgruppenhaltige Polyester aufgebaut werden, die dann mit einem Hydroxyalkylester der Acryl- oder Methacrylsäure umgesetzt werden. Nicht umgesetzte (Meth)Acrylsäure kann durch Auswaschen, Destillieren oder bevorzugt durch Umsetzen mit einer äquivalenten Menge einer Mono- oder Diepoxidverbindung unter Verwendung geeigneter Katalysatoren, wie z.B. Triphenylphosphin, aus dem Reaktionsgemisch entfernt werden. Bezüglich weiterer Einzelheiten zur Herstellung der Polyesteracrylate sei insbesondere auf die DE-OS 33 16 593 und die DE-OS 38 36 370 sowie auch auf die EP-A-54 105, die DE-AS 20 03 579 und die EP-B-2866 verwiesen.

Auch die weiterhin geeigneten Polyether(meth)acrylate sind dem Fachmann prinzipiell bekannt. Sie sind durch verschiedene Methoden herstellbar. Beispielsweise können hydroxylgruppenhaltige Polyether, die mit Acrylsäure und/oder Methacrylsäure verestert werden, durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten werden. Einsetzbar sind auch Polymerisationsprodukte des Tetrahydrofurans oder Butylenoxids.

Durch Auswahl der Art und Menge an eingesetzter Alkohol- und Säurekomponente werden dabei die weiteren Kenngrößen der Polyether(meth)acrylate und Polyester(meth)acrylate, wie z. B. Doppelbindungsgehalt, Doppelbindungsäquivalentgewicht, Gehalt an Verzweigungspunkten, Gehalt an cyclischen Strukturelementen, Gehalt an aliphatischen Strukturelementen mit mindestens 6 C-Atomen , Gehalt an H-Brücken bildenden Strukturelementen u. ä. gesteuert.

Ferner sind auch geeignete Epoxy(meth)acrylate dem Fachmann wohl bekannt und brauchen daher nicht näher erläutert zu werden. Sie werden üblicherweise hergestellt durch durch Anlagerung von Acrylsäure an Epoxidharze, beispielsweise an Epoxidharze auf Basis Bisphenol A oder andere handelsübliche Epoxidharze.

Es ist ferner erfindungswesentlich, dass die radikalisch vernetzbare Komponente (KK) im Mittel mehr als 1, vorzugsweise mindestens 2 ethylenisch ungesättigte Doppelbindungen pro Molekül aufweist. Besonders bevorzugt weist die radikalisch vernetzbare Komponente (KK) mehr als 2 bis maximal 10,0, insbesondere 3,0 bis 9,5, bevorzugt 3,5 bis 9,0 und ganz besonders bevorzugt 4,0 bis 8,5 Doppelbindungen pro Molekül auf.

Im Allgemeinen enthält die radikalisch vernetzbare Komponente (KK) nicht mehr als 10 Gew% an Verbindungen, die nur eine härtbare Gruppe aufweisen, bevorzugt nicht mehr als 7,5 Gew%, besonders bevorzugt nicht mehr als 5 Gew%, ganz besonders bevorzugt nicht mehr als 2,5 Gew%, insbesondere nicht mehr als 1 Gew% und speziell 0 Gew%.

Mit steigendem Doppelbindungsgehalt pro Molekül der radikalisch vernetzbaren Komponente (KK) steigt dabei im Allgemeinen die Vernetzungsdichte der endvernetzten transparenten Beschichtung (KE). Dies bedeutet, dass mit steigendem Doppelbindungsgehalt pro Molekül der radikalisch vernetzbaren Komponente (KK) auch das Speichermodul E(ME)' der endvernetzten transparenten Beschichtung (ME) im gummielastischen Bereich steigt.

Gleichzeitig nimmt jedoch mit steigendem Doppelbindungsgehalt pro Molekül der radikalisch vernetzbaren Komponente (KK) die Reißdehnung der endvernetzten transparenten Beschichtung (KE) ab, d.h. das System wird spröder. Daher weist die endvernetzte transparente Beschichtung (ME) und damit im Allgemeinen auch die endvernetzte transparente Beschichtung (KE) mit steigendem Doppelbindungsgehalt pro Molekül eine erhöhte Tendenz zu Spannungsrissen nach der UV-Härtung auf.

Ferner nimmt bei der gegebenen Stoffklasse der Urethan(meth)acrylate mit steigendem Doppelbindungsgehalt pro Molekül in der Komponente (KK) im Allgemeinen das Verhältnis von Speichermodul G(MT)' zu Verlustmodul G(MT)" bei einer Temperatur von 20 °C der getrockneten, aber noch nicht endvernetzten transparenten Beschichtung (MT) ab.

Selbstverständlich haben aber neben dem Doppelbindungsgehalt auch die übrigen Kenngrößen der reaktiven Komponente (KK) (wie z. B. Molekulargewicht, Anzahl Verzweigungspunkte, Anzahl cyclische Strukturelemente, Anzahl H-Brücken bildende Strukturelemente etc.) Einfluss auf die viskoelastischen Eigenschaften (vgl. auch die unten angeführten Auswirkungen der jeweiligen Kenngrößen auf die viskoelastischen Eigenschaften sowohl der noch nicht endvernetzten Beschichtung (MT) als auch der endvernetzten Beschichtung (ME)). Daher gelten diese oben angeführten Aussagen für den Einfluss des Doppelbindungsgehaltes auf die viskoelastischen Eigenschaften ebenso wie die weiter unten bei der Diskussion des Einflusses der anderen Kenngrößen angeführten Auswirkungen auf die viskoelastischen Eigenschaften jeweils nur unter der hypothetischen Bedingung, dass stets nur ein Parameter, wie hier der Doppelbindungsgehalt, betrachtet wird, während die anderen Parameter nicht gezielt verändert werden.

Die Einführung der Doppelbindungen in die Komponente (KK) erfolgt dabei wie oben beschrieben im Allgemeinen durch Umsetzung von einem oder mehreren ethylenisch ungesättigten Hydroxyalkylestern mit den Isocyanatgruppen des Isocyanates bzw. des Isocyanatpräpolymeren im Falle der Urethan(meth)acrylate bzw. mit den Säuregruppen des Polyesters im Falle der Polyester(meth)acrylate. Ebenso können wie oben beschrieben die Ausgangsoligo- bzw. Ausgangspolymeren, wie z.B. Polyester, Polyether, Epoxide und Acrylatpolymere, mit Acryl- und/oder Methacrylsäure und/oder einer anderen ethylenisch ungesättigten Säure umgesetzt werden.

Beispiele für geeignete ethylenisch ungesättigte Hydroxyalkylester sind Hydroxyalkylester der Acryl- und Methacrylsäure, der Malein- und Fumarsäure, der Croton- und Isocrotonsäure und der Vinylessigsäure, bevorzugt ethylenisch ungesättigte Hydroxyalkylester der Acrylsäure. Besonders bevorzugt werden die ethylenisch ungesättigten Hydroxyethyl- und/oder Hydroxypropyl- und/oder Hydroxybutyl- und/oder Hydroxypentyl- und/oder Hydroxyhexylester, ganz besonders bevorzugt ethylenisch ungesättigte Hydroxyethylester oder ethylenisch ungesättigte Hydroxyethylester zusammen mit ethylenisch ungesättigten Hydroxybutylestern, der genannten ungesättigten Säuren, insbesondere der Acrylsäure, eingesetzt.

Selbstverständlich können zur Einführung der Doppelbindungen in die Komponente (KK) auch Hydroxyalkylester mit mehr als einer Doppelbindung pro Molekül eingesetzt werden, wie z.B. Pentaerythritdi-, Pentaerythrittri- und Pentaerythrittetra-acrylat ö.ä.

Ganz besonders bevorzugt wird zur Einführung der Doppelbindungen in die Komponente (KK) 2-Hydroxyethylacrylat und/oder 4-Hydroxybutylacrylat und/oder Pentaerythrittriacrylat eingesetzt.

Dabei hat die zur Einführung der Doppelbindungen eingesetzte Verbindung je nach ihrer Struktur unter Umständen selbst Einfluss die viskoelastischen Größen, da neben dem Doppelbindungsgehalt unter Umständen auch andere Größen, wie z.B. der Urethangruppengehalt, verändert werden. Wird beispielsweise der Doppelbindungsgehalt der Komponente (KK) dadurch erhöht, daß ein Teil des Kettenverlängerungsmittels durch Hydroxyethylacrylat ersetzt wird, so wird der Urethangruppengehalt entsprechend dem Massenverhältnis von Kettenverlängerungsmittel zu Hydroxyethylacrylat verändert. Wird dagegen der Doppelbindungsgehalt der Komponente (KK) beispielsweise dadurch erhöht, daß anstelle von Hydroxyethylacrylat Hydroxyalkylester mit mehr als einer Doppelbindung pro Molekül, wie z.B. Pentaerythrittriacrylat und/oder Pentaerythrittetraacrylat, eingesetzt werden, so wird der Urethangruppengehalt moderat erniedrigt.

Es ist ferner erfindungswesentlich, dass die radikalisch vernetzbare Komponente (KK) ein zahlenmittleres Molekulargewicht von 1.000 bis 10.000 g/mol, bevorzugt von 2.000 bis 5.000 g/mol und besonders bevorzugt von 2.500 bis 3.500 g/mol, aufweist.

Je höher dabei das Molekulargewicht der reaktiven Komponente (KK) ist, desto niedriger ist das Speichermodul E(ME)' der endvernetzten transparenten Beschichtung (ME) im gummielastischen Bereich.

Gleichzeitig ist das Verhältnis von Speichermodul G(MT)' zu Verlustmodul G(MT)" bei einer Temperatur von 20 °C der getrockneten, aber noch nicht endvernetzten transparenten Beschichtung (MT) im Allgemeinen um so höher, je höher dabei das Molekulargewicht der reaktiven Komponente (KK) ist.

Weiterhin ist es erfindungswesentlich, dass die radikalisch vernetzbare Komponente (KK) einen Doppelbindungsgehalt von 1,0 bis 5,0 mol Doppelbindungen pro 1.000 g reaktive Komponente (KK), vorzugsweise einen Doppelbindungsgehalt von 1,5 bis 4,0 mol Doppelbindungen pro 1.000 g reaktive Komponente (KK) und besonders bevorzugt einen Doppelbindungsgehalt von mehr als 2,0 bis 3,5 mol Doppelbindungen pro 1.000 g reaktive Komponente (KK), aufweist, wobei die Werte jeweils bezogen sind auf das Gewicht der radikalisch vernetzbaren Komponente (KK), aber selbstverständlich ohne nichtreaktive Komponenten, wie z. B. Lösemittel, Wasser oder Additive.

Der Doppelbindungsgehalt der Komponente (KK) hängt dabei - wie dem Fachmann bekannt - neben dem Gehalt an Doppelbindungen pro Molekül insbesondere mit dem zahlenmittleren Molekulargewicht der Komponente (KK) zusammen.

Mit abnehmendem Doppelbindungsgehalt der Komponente (KK) wird die Eigenschaft verbessert, dass die getrocknete, aber noch nicht endvernetzte transparente Beschichtung (KT) nicht mehr fließt und von einer ggf. aufgebrachten Schutzfolie nicht mehr geprägt wird. Dies bedeutet, dass mit abnehmendem Doppelbindungsgehalt der Komponente (KK) insbesondere wegen des damit im Allgemeinen verbundenen Anstiegs an H-Brücken bildenden Strukturen bzw. wegen des erhöhten Molekulargewichtes der Komponente (KK) das Verhältnis von Speichermodul G(MT)' zu Verlustmodul G(MT)" bei einer Temperatur von 20 °C der getrockneten, aber noch nicht endvernetzten transparenten Beschichtung (MT) zunimmt.

Gleichzeitig nimmt mit abnehmendem Doppelbindungsgehalt der Komponente (KK) das Speichermodul E(ME)' im gummielastischen Bereich der endvernetzten transparenten Beschichtung (ME) ab.

Wie dem Fachmann bekannt ist, kann dabei das Molekulargewicht und der Doppelbindungsgehalt über Art und Menge der eingesetzten Aufbaukomponenten sowie über die Reaktionsbedingungen eingestellt werden.

Weiterhin ist es erfindungswesentlich, dass die radikalisch vernetzbare Komponente (KK) im Mittel pro Molekül > 1, bevorzugt ≥ 1,4, besonders bevorzugt >2 Verzweigungspunkte aufweist.

Bei einer Erniedrigung der mittleren Anzahl an Verzweigungspunkten pro Molekül in der Komponente (KK) nimmt im Allgemeinen das Speichermodul E(ME)' der endvernetzten transparenten Beschichtung (ME) im gummielastischen Bereich ab. Gleichzeitig nimmt mit Erniedrigung der mittleren Anzahl an Verzweigungspunkten pro Molekül das Verhältnis Speichermodul G(MT)' zu Verlustmodul G(MT)" bei einer Temperatur von 20 °C der getrockneten, aber noch nicht endvernetzten transparenten Beschichtung (MT) im Allgemeinen ab.

Die mittlere Anzahl an Verzweigungspunkten pro Molekül in der Komponente (KK) wird im Allgemeinen durch den Gehalt an für den Aufbau der Komponente (KK) eingesetzten Verbindungen mit einer Funktionalität größer 2, insbesondere mit einer Funktionalität von mindestens 3, eingestellt.

Die Verzweigungspunkte der radikalisch vernetzbaren Komponente (KK) werden bevorzugt über die Verwendung von Isocyanaten mit einer Funktionalität größer 2, insbesondere mit einer Funktionalität von mindestens 3, eingeführt.

Besonders bevorzugt werden die Verzweigungspunkte eingeführt, indem zur Herstellung der in der radikalisch vernetzbaren Komponente (KK) eingesetzten Oligo- und/oder Polyurethan(meth)acrylate trimere und/oder polymere Isocyanate, insbesondere Isocyanurate, und/oder Addukte bzw. Präpolymere mit einer Isocyanatfunktionalität größer 2, insbesondere Allophanate und/oder Biurete, verwendet werden. Ganz besonders bevorzugt werden die Verzweigungspunkte über die Verwendung eines oder mehrerer Isocyanurate und/oder eines oder mehrerer Biurete eingeführt.

Es ist aber auch möglich, beim Aufbau der radikalisch vernetzbaren Komponente (KK) Alkohole, Thiole oder Amine mit einer Funktionalität größer als 2 einzusetzen, beispielsweise durch die Verwendung von Pentaerythrit, Dipentaerythrit, Trimethylolethan, Trimethylolpropan, Ditrimethylolpropan und Trishydroxyethylisocyanurat.

Es ist außerdem erfindungswesentlich, dass die radikalisch vernetzbare Komponente (KK) 5- 50 Gew.-%, vorzugsweise 10 - 40 Gew.-%, besonders bevorzugt 15 - 30 Gew.-%, jeweils bezogen auf das Gewicht der Komponente (KK) (aber selbstverständlich ohne nichtreaktive Komponenten, wie z. B. Lösemittel, Wasser oder Additive) cyclische Strukturelemente aufweist.

Mit steigendem Gehalt an cyclischen Strukturelementen der Komponente (KK) wird die Eigenschaft verbessert, dass die getrocknete, aber noch nicht endvernetzte transparente Beschichtung (KT) nicht mehr fließt und von einer ggf. aufgebrachten Schutzfolie nicht mehr geprägt wird.

Mit steigendem Gehalt an cyclischen Strukturelementen in der Komponente (KK) nimmt nämlich das Verhältnis von Speichermodul G(MT)' zu Verlustmodul G(MT)" bei einer Temperatur von 20 °C der getrockneten, aber noch nicht endvernetzten transparenten Beschichtung (MT) zu.

Mit steigendem Gehalt an cyclischen Strukturelementen der Komponente (KK) nimmt auch die Chemikalienbeständigkeit, die Witterungsbeständigkeit sowie die Kratzfestigkeit der endvernetzten transparenten Beschichtung (KE) zu. Weiterhin nimmt mit einem zu hohen Gehalt an cyclischen Strukturelementen der Komponente (KK) die Reißdehnung der endvernetzten Beschichtung (KE) ab und damit die Sprödigkeit zu.

Außerdem nimmt mit steigendem Gehalt an cyclischen Strukturelementen in der Komponente (KK) das Speichermodul E(ME)' der endvernetzten transparenten Beschichtung (ME) im gummielastischen Bereich zu.

Es ist bevorzugt, dass die radikalisch vernetzbare Komponente (KK) als cyclische Strukturelemente monocyclische Strukturelemente mit 4 bis 8, besonders bevorzugt mit 5 bis 6 Ringgliedern, und/oder polycyclische Strukturelemente mit 7 bis 18 Ringgliedern, besonders bevorzugt di- und/oder tricyclische Strukturelemente mit bevorzugt 10 bis 12, ganz besonders bevorzugt Tricyclodekanringe, aufweist und/oder dass die cyclischen Strukturelemente substituiert sind.

Die cyclischen Struktureinheiten können sowohl cycloaliphatisch, heterocyclisch als auch aromatisch sein, wobei die Struktureinheiten bevorzugt cycloaliphatisch und/oder heterocyclisch sind. Insbesondere wird eine Kombination aus cycloaliphatischen und heterocyclischen Struktureinheiten eingesetzt.

Die heterocyclischen Struktureinheiten können in der Kette sein - wie z. B. bei Verwendung von Uretdionen - und/oder die Verzweigungspunkte bilden - wie z. B. bei Verwendung von Isocyanuraten. Die cycloaliphatischen Struktureinheiten können ebenfalls in der Kette sein - wie z. B. bei Verwendung von cycloaliphatischen Diolen, wie hydriertem Bisphenol-A, zum Aufbau der Urethane - und/oder die Verzweigungspunkte bilden. Besonders bevorzugt bilden die heterocyclischen Struktureinheiten aber die Verzweigungspunkte, während die cycloaliphatischen Struktureinheiten in der Kette sind.

Bevorzugte cycloaliphatische Strukturelemente sind ggf. substituierte Cyclopentanringe, ggf. substituierte Cyclohexanringe, ggf. substituierte Dicycloheptanringe, ggf. substituierte Dicyclooctanringe und/oder ggf. substituierte Dicyclodekanringe und/oder ggf. substituierte Tricyclodekanringe, insbesondere ggf. substituierte Tricyclodekanringe und/oder ggf. substituierte Cyclohexanringe.

Die heterocyclischen Struktureinheiten können sowohl gesättigt, ungesättigt als auch aromatisch sein. Bevorzugt werden gesättigte heterocyclische Struktureinheiten eingesetzt.

Die Heteroatome sind bevorzugt ausgewählt aus der Gruppe Stickstoff und/oder Sauerstoff und/oder Schwefel und/oder Phosphor und/oder Silicium und/oder Bor, besonders bevorzugt Stickstoff. Die Anzahl der Heteroatome pro Ring beträgt üblicherweise 1 bis 18, bevorzugt 2 bis 8, und ganz besonders bevorzugt 3.

Besonders bevorzugt werden als heterocyclische Struktureinheiten Isocyanuratringe und/oder Uretdione und/oder ggf. substituierte Triazinringe, ganz besonders bevorzugt Isocyanuratringe, eingesetzt.

Zur Einführung der cyclischen Strukturelemente sind prinzipiell auch aromatische Strukturelemente geeignet, wobei bevorzugt der Gehalt an aromatischen Strukturelementen maximal 10 Gew.-%, bevorzugt maximal 5 Gew.-%, und besonders bevorzugt maximal 2 Gew.-%, jeweils bezogen auf das Gewicht der Komponente (KK), beträgt. Aromatische Strukturelemente haben nämlich im Allgemeinen nachteilige Auswirkungen auf die Witterungsbeständigkeit der resultierenden endvernetzten transparenten Beschichtung (KE), so dass der Gehalt an aromatischen Strukturelementen deswegen häufig begrenzt ist.

Die Einführung der cyclischen Strukturelemente in die reaktive Komponente (KK) erfolgt durch Verwendung entsprechender Verbindungen mit cyclischen Strukturelementen zur Herstellung der Komponente (KK). Insbesondere können zur Herstellung der Komponente (KK) Di- und/oder Polyisocyanate mit cyclischen Strukturelementen und/oder Di- bzw. Polyole, Di- bzw. Polyamine, Di- bzw. Polythiole mit cyclischen Strukturelementen eingesetzt werden. Besonders bevorzugt werden Di- und/oder Polyole und/oder Di- und/oder Polyisocyanate mit cyclischen Strukturelementen eingesetzt.

Zur Herstellung der in der radikalisch vernetzbaren Komponente (KK) eingesetzten Oligo- und/oder Polyurethan(meth)acrylate werden daher bevorzugt zumindest anteilig als Isocyanatkomponente Isocyanurate von Di- und/oder Polyisocyanaten, die üblicherweise in der Lackindustrie eingesetzt werden, verwendet. Anstelle oder zusammen mit diesen Isocyanuraten können Präpolymere und/oder Addukte, insbesondere Biurete und/oder Allophanate und/oder Uretdione, von Di- und/oder Polyisocyanaten, die üblicherweise in der Lackindustrie eingesetzt werden, verwendet werden. Besonders bevorzugt werden Isocyanurate und/oder Biurete und/oder Allophanate und/oder Uretdione von aliphatischen und/oder cycloaliphatischen Isocyanaten eingesetzt. Daneben ist es ferner möglich, alleine oder in Kombination mit den oben aufgeführten Isocyanuraten und/oder Biureten und/oder Allophanaten und/oder Uretdionen, cycloaliphatische Di- und/oder Polyisocyanate einzusetzen.

(Cyclo)Aliphatische Di- und/oder Polyisocyanate, die üblicherweise in der Lackindustrie eingesetzt werden, sind beispielsweise Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten.

Geeignet sind ferner auch Isocyanate, die aromatische Strukturelemente aufweisen, bei denen aber die Isocyanatgruppen zumindest teilweise an aliphatische und/oder cycloaliphatische Reste gebunden sind, insbesondere 1,3-Bis-(2-isocyanatopropy(-2-)benzol (TMXDI).

Besonders bevorzugt wird zur Herstellung der in der radikalisch vernetzbaren Komponente (KK) eingesetzten Oligo- und/oder Polyurethan-(meth)acrylate zumindest anteilig das Isocyanurat von (cyclo)aliphatischen Isocyanaten, insbesondere das Isocyanurat von Isophorondiisocyanat und/oder Hexamethylendiisocyanat eingesetzt. Ganz besonders bevorzugt ist eine Mischung aus dem Isocyanurat von Isophorondiisocyanat und/oder dem Isocyanurat von Hexamethylendiisocyanat und/- oder dem Biuret von Hexamethylen-diisocyanurat und/oder 1,3-Bis(isocyanatomethyl)cyclohexan und/oder Dicyclohexylmethan-4,4'-diisocyanat.

Weiterhin geeignet sind die in der EP-B-1 144 476 auf Seite 4, Zeile 43, bis Seite 5, Zeile 31 beschriebenen höherfunktionellen Polyisocyanate auf Basis von Isocyanuraten, (dort a2.1 genannt), Uretdionen (dort a2.2 genannt), Biureten (dort a2.3 genannt), Urethan- und/oder Allophanatgruppen aufweisenden Polyisocyanaten (dort a2.4 genannt), Oxadiazintriongruppen aufweisende Polyisocyanate (dort a2.6 genannt) und Carbodiimid- oder Uretonimin-modifizierte Polyisocyanate (dort a.2.7 genannt).

Zur Herstellung der in der radikalisch vernetzbaren Komponente (KK) eingesetzten Oligomere und/oder Polymere, insbesondere der Oligo- und/oder Polyurethan(meth)acrylate, werden außerdem bevorzugt zumindest anteilig cycloaliphatische Di- bzw. Polyole und/oder cycloaliphatische Di- und/oder Polyamine, insbesondere cycloaliphatische Diole eingesetzt, wie beispielsweise Cyclohexandimethanol, 1,2-, 1,3-oder 1,4-Cyclohexandiol, Cyclooctandiol, hydriertes Bisphenol-A, hydriertes Bisphenol-F und Tricyclodecandimethanol.

Besonders bevorzugt wird zur Herstellung der in der radikalisch vernetzbaren Komponente (KK) eingesetzten Oligomere und/oder Polymere, insbesondere der Oligo- und/oder Polyurethan(meth)acrylate, hydriertes Bisphenol-A eingesetzt.

Wie bereits erwähnt, können cyclische Strukturelemente auch über die Verwendung aromatischer Strukturelemente eingeführt werden, beispielsweise über die anteilige Verwendung von aromatischen Isocyanaten bzw. Trimeren und/oder Präpolymeren und/oder Addukten von aromatischen Isocyanaten, wie z. B. von 1,2- 1,3- und 1,4-Benzoldiisocyanat, 2,4- und 2,6-Tolyulendiisocyanat, 4,4'-Biphenylendiisocyanat, Bis(4-isocyanatophenyl)methan, 2,2- Bis(4-isocyanatophenyl)propan und die stellungsisomeren Naphthalindiisocyanate, insbesondere die technischen Gemische von 2,4- und 2,6-Tolyulendiisocyat. Weitere Beispiele für geeignete aromatische Struktureinheiten sind Triazinringe.

Diese Struktureinheiten können beispielsweise über die Verwendung von Tris(Alkoxycarbonylamino)Triazinen gemäß der US-PS 4 939 213, der US-PS 5 084 541 und der EP-A-624 577 eingeführt werden. Ebenso können Derivate der genannten Verbindungen zum Einsatz kommen.

Es ist außerdem erfindungswesentlich, dass die radikalisch vernetzbare Komponente (KK) mindestens ein aliphatisches Strukturelement mit mindestens 6 C-Atomen, bevorzugt mit 6 bis 18 C-Atomen, besonders bevorzugt mit 6 C-Atomen, in der Kette aufweist.

Diese Strukturelemente wirken flexibilisierend auf die Komponente (KK). Je höher daher der Gehalt an aliphatischen Strukturelementen mit mindestens 6 C-Atomen in der Kette ist, desto niedriger ist das Verhältnis von Speichermodul G(MT)' zu Verlustmodul G(MT)" bei einer Temperatur von 20 °C der getrockneten, aber noch nicht endvernetzten transparenten Beschichtung (MT). Mit steigendem Gehalt an aliphatischen Strukturelementen mit mindestens 6 C-Atomen in der Kette in der Komponente (KK) wird daher die Eigenschaft verschlechtert, dass die getrocknete, aber noch nicht endvernetzte transparente Beschichtung (KT) nicht mehr fließt und von einer ggf. aufgebrachten Schutzfolie nicht mehr geprägt wird.

Weiterhin ist die Chemikalienbeständigkeit der endvernetzten transparenten Beschichtung um so besser, je niedriger der Gehalt an aliphatischen Strukturelementen mit mindestens 6 C-Atomen in der Kette ist.

Außerdem ist das Speichermodul E(ME)' der endvernetzten transparenten Beschichtung (ME) im gummielastischen Bereich um so niedriger, je höher der Gehalt an aliphatischen Strukturelementen mit mindestens 6 C-Atomen in der Kette ist.

Bevorzugt weist die radikalisch vernetzbare Komponente (KK) 3 - 30 Gew.-%, vorzugsweise 5 - 25 Gew.-%, besonders bevorzugt 8 - 20 Gew.-%, jeweils bezogen auf das Gewicht der Komponente (KK) (aber selbstverständlich ohne nichtreaktive Komponenten, wie z. B. Lösemittel, Wasser oder Additive), aliphatische Strukturelemente mit mindestens 6 C-Atomen in der Kette auf.

Zur Einführung in die Komponente (KK) geeignet sind alle längerkettigen Kohlenwasserstoffketten.

Die Einführung dieses aliphatischen Strukturelementes mit mindestens 6 C-Atomen in der Kette in die reaktive Komponente (KK) erfolgt durch Verwendung entsprechender Verbindungen mit diesem aliphatischen Strukturelement mit mindestens 6 C-Atomen in der Kette zur Herstellung der Komponente (KK). Insbesondere können zur Herstellung der Urethan(meth)acrylate Di- und/oder Polyisocyanate und/oder Kettenverlängerungsmittel (Di- bzw. Polyole, Di- bzw. Polyamine, Di- bzw. Polythiole, Di- und/oder Polycarbonsäuren etc.) mit diesem aliphatischen Strukturelement mit mindestens 6 C-Atomen in der Kette eingesetzt werden. Besonders bevorzugt werden Di- und/oder Polyole und/oder Di- und/oder Polycarbonsäuren und/oder Di- und/oder Polyisocyanate mit diesem aliphatischen Strukturelement mit mindestens 6 C-Atomen in der Kette eingesetzt.

Geeignet sind beispielsweise dimere und/oder trimere Fettsäuren zur Modifizierung des Di- und/oder Polyisocyanates.

Besonders bevorzugt in die radikalisch vernetzbare Komponente (KK) eingeführt wird dieses aliphatische Strukturelement mit mindestens 6 C-Atomen in der Kette durch die Verwendung von entsprechend funktionalisierten Derivaten des Hexamethylens, insbesondere durch Verwendung von Verbindungen auf Basis von Hexamethylen, die zusätzlich noch mindestens 1, bevorzugt mindestens 2, Isocyanatgruppen oder OH- und/oder NH- und/oder SH- Gruppen aufweisen, bei der Herstellung der Oligo- und/oder Polyurethan(meth)acrylate.

Beispielsweise einsetzbar sind Hexamethylendiisocyanat und/oder isocyanatfunktionelle Tri- bzw. Polymere und/oder isocyanatfunktionelle Addukte des Hexamethylendiisocyanates, insbesondere das Biuret und/oder das Isocyanurat des Hexamethylendiisocyanates. Ferner einsetzbar sind auch das Hexamethylendiol und/oder das Hexamethylendiamin oder ähnliche Verbindungen. Möglich ist schließlich auch die Verwendung von Verbindungen, die außer mindestens 1 ethylenisch ungesättigten Doppelbindung und mindestens 1 reaktiven Gruppe, die gegenüber Isocyanatgruppen oder OH-Gruppen oder NH-Gruppen reaktiv ist, noch dieses aliphatische Strukturelement mit mindestens 6 C-Atomen in der Kette aufweist, wie z. B. Hydroxyhexylacrylat.

Entsprechend ist auch eine Flexibilisierung der Polyether(meth)acrylate und der Polyester(meth)acrylate ist beispielsweise dadurch möglich, daß entsprechende OH-funktionelle Praepolymere bzw. Oligomere (Polyether- oder Polyester-Basis) mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren, umgesetzt werden. Diese Flexibilisierungsreaktion kann dabei vor oder nach der Addition von Acryl- bzw. Methacrylsäure an die Oligomere bzw. Praepolymere durchgeführt werden.

Eine Flexibilisierung der Epoxy(meth)acrylate ist beispielsweise analog dadurch möglich, daß entsprechende epoxy-funktionelle Praepolymere bzw. Oligomere mit längerkettigen, aliphatischen Dicarbonsäuren, insbesondere aliphatischen Dicarbonsäuren mit mindestens 6 C-Atomen, wie beispielsweise Adipinsäure, Sebacinsäure, Dodecandisäure und/oder Dimerfettsäuren umgesetzt werden. Diese Flexibilisierungsreaktion kann dabei vor oder nach der Addition von Acryl- bzw. Methacrylsäure an die Oligomere bzw. Praepolymere durchgeführt werden.

Wie oben ausgeführt, führt die Flexibilisierung der Polyether(meth)-acrylate bzw. der Polyester(meth)acrylate bzw. der Epoxy(meth)acrylate, also ein steigender Gehalt an an aliphatischen Strukturelementen mit mindestens 6 C-Atomen in der Kette, dazu, dass die Eigenschaft verschlechtert wird, dass die getrocknete, aber noch nicht endvernetzte transparente Beschichtung (KT) nicht mehr fließt und von einer ggf. aufgebrachten Schutzfolie nicht mehr geprägt wird.

Weiterhin ist die Chemikalienbeständigkeit der endvernetzten transparenten Beschichtung um so besser, je niedriger der Gehalt an aliphatischen Strukturelementen mit mindestens 6 C-Atomen in der Kette ist.

Außerdem ist das Speichermodul E(ME)' der endvernetzten transparenten Beschichtung (ME) im gummielastischen Bereich um so niedriger, je höher der Gehalt an aliphatischen Strukturelementen mit mindestens 6 C-Atomen in der Kette ist.

Neben diesen bereits aufgeführten Parametern werden die viskoelastischen Kenngrößen sowohl der noch nicht endvernetzten Beschichtung (MT) als auch der endvernetzten Beschichtung (ME) durch den Gehalt an H-Brücken bildenden Strukturelementen in der radikalisch vernetzbaren Komponente (KK) beeinflusst. Es ist daher für die vorliegende Erfindung wesentlich, dass die radikalisch vernetzbare Komponente (KK) H-Brücken bildende Strukturelemente in einer solchen Menge aufweist, dass
1. eine aus der Mischung (M) hergestellte, noch nicht endvernetzte transparente Beschichtung (MT) ein Verhältnis von Speichermodul G(MT)' zu Verlustmodul G(MT)" von 5 bis 200 , bevorzugt von 8 bis 100, besonders bevorzugt von 10 bis 80, aufweist, wobei G(MT)' und G(MT)" bei einer Temperatur von 20 °C durch rheologische Oszillationsmessungen mit Hilfe eines Platte-Platte-Messsystems bei einer Heizrate von 2°C pro Minute und einer Kreisfrequenz von 10 s⁻¹ gemessen worden sind, und
2. eine aus der Mischung (M) hergestellte, endvernetzte transparente Beschichtung (ME) ein Speichermodul E(ME)' von 1,0 * 10^{7,0} bis 8,0 * 10^{7,0} Pa, bevorzugt von 1,5 * 10^{7,0} bis 4,5 * 10^{7,0} Pa, besonders bevorzugt von 1,9 * 10^{7,0} bis 3,7* 10^{7,0} Pa, aufweist, wobei E(ME)' im gummielastischen Bereich an freien endvernetzten Filmen mit einer Schichtdicke von 40 µm +/- 10 µm mit der Dynamisch-Mechanischen-Thermo-Analyse bei einer Heizrate von 2°C pro Minute und einer Frequenz von 1 Hz gemessen worden ist.

Je höher dabei der Gehalt an H-Brücken bildenden Strukturelementen ist, desto höher ist das Verhältnis von Speichermodul G(MT)' zu Verlustmodul G(MT)" bei einer Temperatur von 20 °C der getrockneten, aber noch nicht endvernetzten transparenten Beschichtung (MT).

Je höher der Gehalt an H-Brücken bildenden Strukturelementen ist, desto weniger wird daher die getrocknete, aber noch nicht endvernetzte Klarlackschicht durch eine ggf. aufgebrachte Schutzfolie geprägt.

Je höher der Gehalt an H-Brücken bildenden Strukturelementen, desto geringer ist daher auch die Neigung der getrockneten, aber noch nicht endvernetzten Klarlackschicht zum Fließen.

Je höher der Gehalt an H-Brücken bildenden Strukturelementen ist, desto höher ist auch das Speichermodul E(ME)' der endvernetzten transparenten Beschichtung (ME) im gummielastischen Bereich.

Nur durch die Messung der viskoelastischen Eigenschaften mittels rheologischer Messungen im Falle der noch nicht endvernetzten Beschichtung (MT) bzw. mittels der Dynamisch-Mechanischen Thermo-Analyse (im Folgenden auch kurz DMTA genannt) an freien Filmen im Falle der endvernetzten Beschichtung (ME) steht also ein universelles, repräsentatives Auswahlkriterium für die Bereitstellung von Beschichtungsmitteln zur Verfügung, bei dem Formteile in ihrem folienseitigen Erscheinungsbild mit den gewünschten Eigenschaften erhalten werden.

Falls die viskoelastischen Eigenschaften dagegen nicht die erforderlichen Werte aufweisen sollten, kann durch Variation des Gehaltes an H-Brücken bildenden Strukturelementen dieser Wert eingestellt werden.

Zwar haben - wie bereits ausgeführt - neben dem Gehalt an H-Brücken bildenden Strukturelementen auch die übrigen Kenngrößen der reaktiven Komponente (KK) (wie z. B. Doppelbindungsgehalt, Molekulargewicht, Anzahl Verzweigungspunkte, Anzahl cyclische Strukturelemente etc.) den bei der Diskussion der einzelnen Parameter jeweils angegebenen Einfluss auf die viskoelastischen Eigenschaften. Durch die angegebenen Wertebereiche für diese Parameter können die viskoelastischen Eigenschaften durch gezielte Variation des Gehaltes an H-Brücken bildenden Strukturelementen auf die erfindungsgemäßen Werte eingestellt werden.

So kann der Fachmann die bei der Erniedrigung beispielsweise des Doppelbindungsgehaltes pro 1000 g reaktive Komponente hervorgerufene Erniedrigung des Speichermoduls E(ME)' durch eine entsprechende Erhöhung des Gehaltes an H-Brücken bildenden Strukturelementen ausgleichen. Auch eine Erhöhung des Speichermoduls E(ME)' - beispielsweise durch eine Erhöhung des Anteils an cyclischen Strukturelementen - kann der Fachmann durch eine entsprechende Erniedrigung des Gehaltes an H-Brücken bildenden Strukturelementen ausgleichen. Entsprechendes gilt jeweils auch für eine Änderung der übrigen stofflichen Parameter. Erfindungswesentlich ist - wie bereits mehrfach ausgeführt -, dass das Speichermodul E(ME)' sowie das Verhältnis von Speichermodul G(MT)' zu Verlustmodul G(MT)" jeweils Werte innerhalb des beanspruchten Bereichs aufweist.

Als H-Brücken bildende Strukturelemente kommen hier insbesondere Urethangruppen, Allophanatgruppen, Biuretgruppen, Harnstoffgruppen, Carbamatgruppen, Carbonatgruppen, Hydroxylgruppen, Amidgruppen, Carboxylgruppen, Ethergruppen, Estergruppen und ionische bzw. Ionen bildende Gruppen in Betracht.

Besonders bevorzugt sind H-Brücken bildenden Strukturelemente, die sowohl als Donor als auch als Akzeptor fungieren. Insbesondere sind die H-Brücken bildenden Strukturen daher ausgewählt aus der Gruppe Urethangruppen, Allophanatgruppen, Biuretgruppen, Harnstoffgruppen, Carbamatgruppen und Amidgruppen. Ganz besonders bevorzugt wird der Gehalt an H-Brücken bildenden Strukturelemente eingestellt über die Art und Menge der verwendeten Isocyanataddukte bzw. Isocyanatpräpolymere. Eine Erhöhung des Anteils an H-Brücken bildenden Strukturelementen wird daher ganz besonders bevorzugt dadurch erfolgen, dass die Menge an eingesetztem Biuret und/oder Allophanat und/oder der Urethangruppengehalt erhöht wird. Vorteilhaft ist auch der zusätzliche Einbau von Carbamatgruppen und/oder Amidgruppen und/oder Harnstoffgruppen zu den Urethangruppen.

Das vernetzbare Beschichtungsmittel (K) enthält bevorzugt 30,0 bis 99,9 Gew.-%, besonders bevorzugt 34,0 bis 69,9 Gew.-% und ganz besonders bevorzugt 38,8 bis 59,5 Gew.-%, jeweils bezogen auf das Gesamtgewicht des Beschichtungsmittels (K), der Komponente (KK).

Vorzugsweise enthalten die vernetzbaren Beschichtungsmittel (K) mindestens einen Initiator der chemischen Vernetzung. Vorzugsweise sind diese Initiatoren Photoinitiatoren. Bevorzugt wird der Photoinitiator oder werden die Photoinitiatoren aus der Gruppe, bestehend aus unimolekularen (Typ I) und bimolekularen (Typ II) Photoinitiatoren ausgewählt. Besonders bevorzugt werden die Photoinitiatoren des Typs I aus der Gruppe, bestehend aus Benzophenonen in Kombination mit tertiären Aminen, Alkylbenzophenonen, 4,4'-Bis(dimethylamino)benzophenon (Michlers Keton), Anthron und halogenierten Benzophenonen, und die Photoinitiatoren des Typs II aus der Gruppe, bestehend aus Benzoinen, Benzoinderivaten, insbesondere Benzoinethern, Benzilketalen, Acylphosphinoxiden, insbesondere bei 2,4,6-Trimethylbenzoyldiphenylphosphinoxid und Ethyl-2,4,6-trimethylbenzoylphenylphosphinat, Bisacylphosphinoxiden, Phenylglyoxylsäureestern, Campherchinon, alpha-Aminoalkylphenonen, alpha,alpha-Dialkoxyacetophenonen und alpha-Hydroxyalkylphenonen, ausgewählt.

Wenn die Beschichtungsmittel ausschließlich oder zusätzlich thermisch endvernetzt werden, enthalten sie bevorzugt C-C-spaltende Initiatoren, vorzugsweise Benzpinakole. Beispiele geeigneter Benzpinakole sind Benzpinakolsilylether oder die substituierten und unsubstituierten Benzpinakole, wie sie in dem amerikanischen Patent US 4,288,527 A in Spalte 3, Zeilen 5 bis 44, und der WO02/16461, Seite 8, Zeile 1, bis Seite 9, Zeile 15, beschrieben werden. Bevorzugt werden Benzpinakolsilylether, insbesondere Gemische aus monomeren und oligomeren Benzpinakolsilylethern, verwendet.

Der Gehalt der vernetzbaren Beschichtungsmittel (K) an den Initiatoren kann breit variieren und richtet sich nach den Erfordernissen des Einzelfalls und den anwendungstechnischen Eigenschaften, die die hieraus hergestellten Beschichtungen (KE) haben sollen. Vorzugsweise liegt der Gehalt bei 0,1 bis 10, insbesondere 1,0 bis 7,0 Gew.-%, jeweils bezogen auf den Festkörper des Beschichtungsmittels (K).

Darüber hinaus können die vernetzbaren Beschichtungsmittel (K) übliche und bekannte Zusatzstoffe in wirksamen Mengen enthalten. Üblicherweise beträgt die Menge dieser Zusatzstoffe zwischen 0 und 10 Gew.-%, bevorzugt zwischen 0,2 und 5,0 Gew.-%, jeweils bezogen auf den Festkörper des Beschichtungsmittels (K). Vorzugsweise werden sie aus der Gruppe, bestehend aus Lichtschutzmitteln, wie UV-Absorber und reversible Radikalfänger (HALS); Antioxidantien; Netzmitteln; Emulgatoren; Slipadditiven; Polymerisationsinhibitoren; Haftvermittlern; Verlaufmitteln; filmbildenden Hilfsmitteln; Rheologiehilfsmitteln; Flammschutzmitteln; Korrosionsinhibitoren, die keine Pigmente sind; Rieselhilfen; Wachsen; Sikkativen; Bioziden und Mattierungsmitteln, ausgewählt.

Beispiele geeigneter Zusatzstoffe werden im Detail in dem Lehrbuch »Lackadditive« von Johan Bieleman, Wiley-VCH, Weinheim, New York, 1998, in D. Stoye und W. Freitag (Editors), in der deutschen Patentanmeldung DE 199 14 896 A1, Spalte 14, Zeile 26, bis Spalte 15, Zeile 46, oder in der deutschen Patentanmeldung DE 199 08 018 A1, Seite 9, Zeile 31, bis Seite 8, Zeile 30, beschrieben.

Die vernetzbaren Beschichtungsmittel (K) enthalten im Allgemeinen noch konventionelle Lösemittel und/oder Wasser, können aber auch im wesentlichen oder vollständig frei von Lösemittel und im wesentlichen oder vollständig frei von Wasser als sogenannte 100% Systeme formuliert werden. Wenn die Beschichtungsmittel (K) Lösemittel enthalten, dann enthalten sie bevorzugt 20 bis 70 Gew.-%, besonders bevorzugt 30 bis 64,5 Gew.-% und ganz besonders bevorzugt 40 bis 60 Gew.-%, jeweils bezogen auf das Gesamtgewicht des Beschichtungsmittels (K), eines oder mehrerer Lösemittel und/oder Wasser, bevorzugt eines oder mehrerer organischer Lösemittel.

Geeignet sind alle üblicherweise in Klarlacken eingesetzten Lösemittel, insbesondere Alkohole, Glykolether, Ester, Etherester und Ketone, aliphatische und/oder aromatische Kohlenwasserstoffe, wie beispielsweise Aceton, Methylisobutylketon, Methylethylketon, Butylacetat, 3-Butoxy-2-propanol, Ethylethoxypropionat, Butylglykol, Dipropylenglykolmethylether, Glykolsäurebutylester, Shellsol ® T, Pine Oel 90/95, Solventnaphtha ®, Shellsol ® A, Benzin 135/180 u.ä.

Bevorzugt enthält das vernetzbare Beschichtungsmittel (K) weniger als 20 Gew.-%, insbesondere weniger als 10 Gew.-%, besonders bevorzugt weniger als 5 Gew.-% , jeweils bezogen auf das Gewicht der Komponente (KK), und ganz besonders bevorzugt keinen polymeren, gesättigten Bestandteil (KS), insbesondere keine thermoplastischen Polymeren.

Methodisch weist die Herstellung der Beschichtungsmittel (K) keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Kneter, Ultraturrax, Inline-Dissolver, statische Mischer, Zahnkranzdispergatoren, Druckentspannungsdüsen und/oder Microfluidizer, bevorzugt unter Ausschluss von aktinischer Strahlung.

Das transparente Beschichtungsmittel wird üblicherweise in solchen Menge aufgetragen, dass eine Trockenfilmschichtdicke von mindestens 30 µm, bevorzugt eine Trockenfilmschichtdicke von 30 bis 160 µm, besonders bevorzugt von 40 bis 80 µm, resultiert.

### Pigmentiertes Beschichtungsmittel (P)

Als pigmentiertes Beschichtungsmittel (P) werden pigmentierte Beschichtungsmittel (P) eingesetzt, die im Allgemeinen physikalisch oder thermisch und/oder mit aktinischer Strahlung härtbar sind. Dabei kann es ein so genanntes 100%-Systeme sein, das im Wesentlichen oder völlig frei von Wasser und organischen Lösemitteln ist. Bevorzugt werden aber konventionelle, d. h. organische Lösemittel enthaltende, Beschichtungsmittel oder wässrige Beschichtungsmittel eingesetzt.

Die eingesetzten pigmentierten Beschichtungsmittel (P) enthalten üblicherweise
(I) ein oder mehrere Lösemittel und/oder Wasser
(II) ein oder mehrere Bindemittel, bevorzugt ein oder mehrere Polyurethanharze und/oder Acrylatharze, besonders bevorzugt eine Mischung aus mindestens einem Polyurethanharz und mindestens einem Acrylatharz,
(III) ggf. mindestens ein Vernetzungsmittel
(IV) ein oder mehrere Pigmente sowie
(V) ggf. ein oder mehrere übliche Hilfs- und Zusatzstoffe

Bevorzugt werden die üblichen und bekannten, physikalisch und/oder thermisch härtbaren, konventionellen oder wässrigen Basislacke (P) verwendet werden, wie sie beispielsweise aus der WO 03/016095 A1, Seite 10, Zeile 15, bis Seite 14, Zeile 22, oder insbesondere aus der US-A-5, 030, 514, Spalte 2, Zeile 63, bis Spalte 6, Zeile 68 und Spalte 8, Zeile 53 bis Spalte 9, Zeile 10 sowie EP-B-754 740, Spalte 3, Zeile 37, bis Spalte 6, Zeile 18, bekannt sind.

Ganz besonders bevorzugt werden thermisch härtbare Wasserbasislacke (P) eingesetzt.

Als Bindemittel geeignet sind dabei die in Basislacken im Bereich der Automobilindustrie üblicherweise eingesetzten Polyurethanharze und Acrylatharze, wobei in dem Fachmann bekannter Weise über die Auswahl der Art und Menge der zur Herstellung dieser Bindemittel eingesetzten Aufbaukomponenten insbesondere die Flexibilität und damit die Eignung der Bindemittel für das erfindungsgemäße Verfahren gesteuert wird. Bezüglich Einzelheiten sei wiederum beispielsweise auf die US-A--5,030,514, Spalte 2, Zeile 63, bis Spalte 6, Zeile 68 und Spalte 8, Zeile 53 bis Spalte 9, Zeile 10 verwiesen.

Darüber hinaus enthalten die pigmentierten Beschichtungsmittel bevorzugt als Vernetzungsmittel noch mindestens ein Aminoplastharz. Geeignet sind prinzipiell die im Bereich der Lackindustrie üblicherweise eingesetzten Aminoplastharze, wobei über die Reaktivität der Aminoplastharze die Eigenschaften der pigmentierten Beschichtungsmittel gesteuert werden können.

Der Gehalt an Bindemittel und ggf. Aminoplastharz in dem pigmentierten Beschichtungsmittel kann dabei breit variiert werden und liegt üblicherweise bei 0 bis 70 Gew.-%, bevorzugt 10 bis 60 Gew.-%, Polyurethanharz, 0 bis 70 Gew.-%, bevorzugt 10 bis 60 Gew.-%, Acrylatharz und 0 bis 45 Gew.-%, bevorzugt 5 bis 40 Gew.-%, Aminoplastharz, jeweils bezogen auf die Gesamtmenge an Bindemittel plus Aminoplastharz.

Bezogen auf das Gesamtgewicht des pigmentierten Beschichtungsmittels (P) beträgt der Anteil an Bindemittel plus ggf. Aminoplastharz üblicherweise 10 bis 50 Gew.-%.

Das pigmentierte Beschichtungsmittel (P) enthält außerdem mindestens ein Pigment. Vorzugsweise wird das Pigment, aus der Gruppe, bestehend aus organischen und anorganischen, farbgebenden, effektgebenden, farb- und effektgebenden, magnetisch abschirmenden, elektrisch leitfähigen, korrosionshemmenden, fluoreszierenden und phosphoreszierenden Pigmenten, ausgewählt. Vorzugsweise werden die farb- und/oder effektgebenden Pigmente verwendet.

Beispiele geeigneter Effektpigmente, die auch farbgebend sein können, sind Metallplättchenpigmente, wie handelsübliche Aluminiumbronzen, gemäß DE 36 36 183 A1 chromatierte Aluminiumbronzen, und handelsübliche Edelstahlbronzen, sowie nichtmetallische Effektpigmente, wie zum Beispiel Perlglanz- bzw. Interferenzpigmente, plättchenförmige Effektpigmente auf der Basis von Eisenoxid oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente« verwiesen.

Geeignete organische und/oder anorganische farbgebende Pigmente sind die in der Lackindustrie üblicherweise eingesetzten Pigmente.

Der Gehalt des Beschichtungsmittels (P) an den Pigmenten kann sehr breit variieren und richtet sich in erster Linie, nach der Tiefe der Farbe und/oder der Intensität des Effekts, die eingestellt werden sollen, sowie nach der Dispergierbarkeit der Pigmente in den Beschichtungsmitteln (P). Vorzugsweise liegt der Pigmentgehalt, jeweils bezogen auf das Beschichtungsmittel (P), bei 0,5 bis 50, bevorzugt 1 bis 30, besonders bevorzugt 2 bis 20 und insbesondere 2,5 bis 10 Gew.-%.

Außer den vorstehend beschriebenen Pigmenten kann das Beschichtungsmittel (P) übliche und bekannte Hilfs- und Zusatzstoffe, wie organische und anorganische, transparente und deckende Füllstoffe und Nanopartikel sowie weitere übliche Hilfs- und Zusatzstoffe in üblichen Mengen, bevorzugt 0 bis 40 Gew.-%, bezogen auf das Beschichtungsmittel (P), enthalten.

Das pigmentierte Beschichtungsmittel (P) wird üblicherweise in solchen Menge aufgetragen, dass eine Trockenfilmschichtdicke von mindestens 30 µm, bevorzugt eine Trockenfilmschichtdicke von 30 bis 160 µm, besonders bevorzugt von 50 bis 150 µm, resultiert.

### Thermoplastische Trägerfolie (T)

Die thermoplastische Trägerfolie (T) kann einschichtig sein oder mindestens eine weitere Schicht umfassen.

So kann (T) auf der der späteren Beschichtung (B) abgewandten Seite (T2) mindestens eine Haftvermittlerschicht (HS) enthalten sein.

Bevorzugt ist aber die Seite (T2) der Trägerfolie direkt ohne Zwischenschicht mit der Kunststoffmasse (KM) verbunden.

Zwischen der Oberfläche (T1) und der späteren Beschichtung (B) kann sich noch mindestens eine, insbesondere eine, Zwischenschicht (ZS), wie z. B. Füllerschicht (FS) und/oder Haftvermittlerschicht (HS) befinden. Dabei kann oder können sich zwischen der Oberfläche (T1) und der Haftvermittlerschicht (HS) und/oder zwischen der Haftvermittlerschicht (HS) und der Beschichtung (B) mindestens eine, insbesondere eine, Übergangsschicht (ÜS) befinden. Bevorzugt ist aber die Beschichtung (B) direkt, also ohne Zwischenschicht, auf der Oberfläche (T1) angeordnet.

Die Trägerfolie (T) besteht im Wesentlichen oder völlig aus mindestens einem thermoplastischen Polymer. Vorzugsweise wird das thermoplastische Polymer aus der Gruppe, bestehend aus üblichen und bekannten, linear, verzweigt, sternförmig kammförmig und/oder, blockartig aufgebauten Homo- und Copolymerisaten, ausgewählt. Bevorzugt werden die Homo- und Copolymerisate aus der Gruppe, bestehend aus Polyurethanen, Polyestern, insbesondere Polyethylenterephthalaten und Polybutylenterphthalaten, Polyethern, Polyolefinen, Polyamiden, Polycarbonaten, Polyvinylchloriden, Polyvinylidenfluoriden, Poly(meth)acrylaten, insbesondere Polymethylmethacrylaten und Polybutylmethacrylaten und schlagzäh modifizierten Polymethylmethacrylaten, Polystyrolen, insbesondere schlagzäh modifizierten Polystyrolen, speziell Acrylnitrilbutadienstyrolcopolymeren (ABS), Acrylstyrolacrylnitrilcopolymeren (ASA) und Acrylnitrilethylenpropylendienstyrolcopolymeren (A-EPDM); Polyetherimiden, Polyetherketonen, Polyphenylensulfiden, Polyphenylenethern und Mischungen dieser Polymeren, ausgewählt.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Mit besonderem Vorteil werden ASA, Polycarbonate, Blends aus ASA und Polycarbonaten, Polypropylen, Polymethylmethacrylate oder schlagzäh modifizierte Polymethylmethacrylate, insbesondere Blends aus ASA und Polycarbonaten, bevorzugt mit einem Polycarbonatanteil > 40%, insbesondere > 50%, verwendet.

Für die Trägerfolie (T) bevorzugt eingesetzte Materialien sind auch insbesondere die in der DE-A-101 13 273 auf Seite 2, Zeile 61, bis Seite 3, Zeile 26 beschriebenen thermoplastischen Polymeren.

Die Homo- und Copolymerisate können die auf dem Gebiet der thermoplastischen Kunststoffe üblichen und bekannten Additive enthalten. Außerdem könne sie übliche und bekannte Füllstoffe, Verstärkerfüllstoffe und Fasern enthalten. Nicht zuletzt können sie auch die Pigmente einschließlich Effektpigmente und/oder übliche und bekannte Farbstoffe enthalten und so eine Farbtonanpassung der Trägerfolien an den Farbton der aus den pigmentierten Beschichtungsmitteln (P) erhaltenen Beschichtung ermöglichen.

Die Schichtdicke der Trägerfolie (T) liegt üblicherweise bei mehr als 0,5 mm, bevorzugt zwischen 0,7 und 2,0 mm und besonders bevorzugt zwischen 0,9 und 1,2 mm.

Als Übergangschichten (ÜS) können übliche und bekannte, vorzugsweise 1 bis 50 µm dicke Schichten aus thermoplastischen Materialien, insbesondere aus den vorstehend beschriebenen thermoplastischen Polymeren verwendet werden.

Die Haftvermittlerschicht wird dann verwendet, wenn die Haftung zwischen der Trägerfolie (T) und der Kunststoffmasse (KM) ungenügend ist, beispielsweise, wenn für (T) oder (KM) Polyolefine zum Einsatz kommen. Als Haftvermittlerschicht (HS) können übliche und bekannte, wie z. B. in DE-A-101 13 273 auf Seite 4, Zeilen 27 bis 29 beschrieben, vorzugsweise 1 bis 100 µm dicke Schichten aus üblichen Haftvermittlern verwendet werden.

### Kunststoffmaterial (KM)

Vorzugsweise enthält das flüssige oder erweichte Kunststoffmaterial (KM) mindestens ein geschmolzenes bzw. erweichtes, thermoplastisches Polymer, insbesondere mindestens eines der vorstehend bei der Trägerfolie (T) beschriebenen thermoplastischen Polymeren, oder es besteht aus diesem.

Bevorzugt werden Kunststoffmaterialien eingesetzt, die Fasern enthalten, wobei unter Fasern auch plättchenförmige Produkte zu verstehen sind. Beispiele für geeignete Fasern sind Kohlenstoff- Aramid-Stahl- oder Glasfasern, Aluminium-Flakes, bevorzugt Glasfasern.

Beispielsweise sind auch die in der DE-A-101 13 273 auf Seite 4, Zeile 44, bis Seite 5, Zeile 45 beschriebenen Kunststoffmaterialien geeignet. Die Verfahrensvariante, bei der ein solches geschmolzenes bzw. erweichtes, thermoplastisches Polymer verwendet wird, wird auch als Hinterspritzen (»injection moulding«) bzw. Hinterpressen bezeichnet.

Bei dem flüssigen oder erweichten Kunststoffmaterial kann sich aber auch um ein übliches und bekanntes reaktionsfähiges Gemisch handeln, das im Formwerkzeug bzw. Hinterfütterwerkzeug das feste Kunststoffmaterial (KM) bildet. Das Kunststoffmaterial (KM) kann dabei ebenfalls die vorstehend im Zusammenhang mit der Trägerfolie (T) beschriebenen Zusatzstoffe enthalten. Ferner können auch Kunststoffmaterialien (KM) eingesetzt werden, die porenbildende Treibmittel enthalten. Beispiele für geeignete reaktionsfähige Gemische sind die im Hinterschäumverfahren üblicherweise eingesetzten bekannten reaktionsfähigen Gemische, insbesondere PolyurethanSchäume, z.B. die in der EP-B-995 667, insbesondere EP-B-995 667, Spalte 2, Zeile 40, bis Spalte 3, Zeile 14; Spalte 5, Zeilen 23 bis 29; Spalte 8, Zeilen 33 bis 38, beschriebenen reaktionsfähigen Gemische.

Die Verfahrensvariante, bei der ein solches reaktionsfähiges Gemisch bzw. treibmittelhaltiges Gemisch (KM) verwendet wird, wird auch als Hinterschäumen (»reaction-injection moulding«, RIM) bezeichnet.

### Schutzfolie (S)

Als Schutzfolie (S) geeignet sind alle üblicherweise eingesetzten Schutzfolien, die ein- oder mehrschichtig sein können. Insbesondere werden die in der DE-A-10335620, Seite 17, Zeile 20, bis Seite 19, Zeile 22, beschriebenen Schutzfolien eingesetzt.

Geeignet sind insbesondere Schutzfolien (S) auf Basis von Homo- und Copolymerisate aus Polyethylen, Polypropylen, Ethylencopolymerisaten, Propylencopolymerisaten und Ethylen-Propylen-Copolymerisaten.

Bevorzugt wird die Schutzfolie derart ausgewählt, dass sie bei einer Schichtdicke von 50 µm eine Transmission > 70% für UV-Strahlung und sichtbares Licht einer Wellenlänge von 230 bis 600 nm hat.

Ferner werden bevorzugt Schutzfolien eingesetzt, die im Temperaturbereich von Raumtemperatur bis 100 °C einen Speichermodul E' von mindestens 10⁷ Pa sowie längs und quer zu der bei der Herstellung der Schutzfolie mit Hilfe gerichteter Herstellverfahren erzeugten Vorzugsrichtung bei 23 °C eine Bruchdehnung > 300% aufweisen. Besonders bevorzugt weist die der Beschichtung (B) zugewandte Seite der Schutzfolie außerdem eine Härte < 0,06 GPa bei 23 °C und eine mit Hilfe der atomic force miscroscopy (AFM) bestimmte Rauhigkeit, entsprechend einem Rₐ-Wert aus 50 µm² < 30 nm, auf.

Ganz besonders bevorzugt sind die Schutzfolien (S) 10 bis 100 µm, insbesondere 30 bis 70 µm, dick.

Die erfindungsgemäß zu verwendenden Schutzfolien (S) sind üblich und bekannt und werden beispielsweise von der Firma Bischof + Klein, D-49525 Lengerich, unter der Bezeichnung GH-X 527, GH-X 529 und GH-X-535 angeboten.

### Verfahren zur Herstellung von Formteilen

### Verfahrensschritt I

Das pigmentierte Beschichtungsmittel (P) kann in einer oder in zwei oder mehreren Schichten auf die thermoplastische Trägerfolie aufgebracht werden.

Wird das pigmentierte Beschichtungsmittel (P) in nur einer Schicht aufgetragen, so erfolgt dies vorzugsweise mit Hilfe eines nicht gerichteten Applikationsverfahrens, das in den resultierenden pigmentierten Beschichtungen keine Anordnung der Pigmente in einer Vorzugsrichtung hervorruft. D. h., die Pigmente sind in der Beschichtung isotrop verteilt. Beispiele geeigneter nicht gerichteter Applikationsverfahren und Vorrichtungen hierfür sind aus der WO 03/016095 A1, Seite 20, Zeile 4, bis Seite 23, Zeile 25, bekannt. Insbesondere werden pneumatische oder elektrostatische Spritzvorrichtungen verwendet, wie sie in der WO 03/016095 A1, Seite 20, Zeile 4, bis Seite 23, Zeile 25 beschrieben sind.

Wird das pigmentierte Beschichtungsmittel (P) in zwei oder mehreren Schichten aufgetragen, so erfolgt dies vorzugsweise dadurch, dass die erste - oder bei insgesamt mehr als 2 pigmentierten Schichten - die ersten Schichten mit Hilfe eines gerichteten Applikationsverfahrens, das in der resultierenden pigmentierten Beschichtung eine Anordnung der Pigmente in einer Vorzugsrichtung, d. h., eine anisotrope Verteilung der Pigmente hervorruft, aufgetragen wird bzw. werden. Beispiele geeigneter gerichteter Applikationsverfahren sind aus der WO 03/016095 A1, Seite 15, Zeilen 6 bis 19, bekannt. Insbesondere werden Rakel, Gießvorrichtungen und Walzen verwendet. Die letzte pigmentierte Schicht wird dann mittels des oben beschriebenen nicht gerichteten Applikationsverfahrens aufgebracht.

Das Beschichtungsmittel (K) kann ebenfalls in einer oder mehreren Schichten, bevorzugt in einer Schicht, mit Hilfe der vorstehend beschriebenen gerichteten und nicht gerichteten Applikationsverfahren aufgetragen werden. Bevorzugt wird das Beschichtungsmittel (K) mit gerichteten Applikationsverfahren aufgetragen, ganz bevorzugt mit Extrusionsgießern. Bevorzugt werden die Beschichtungsmittel (K) unter Ausschluss von aktinischer Strahlung aufgetragen und weiter verarbeitet.

Im Allgemeinen wird außerdem im Falle der mehrschichtigen Applikation der pigmentierten Beschichtungsmittel (P) vor Applikation der nächsten Schicht des pigmentierten Beschichtungsmittel kurz abgelüftet, bevorzugt bei einer erhöhten Temperatur. Ebenso wird vor Applikation des Beschichtungsmittels (K) das zuvor aufgebrachte pigmentierte Beschichtungsmittel (P) kurz abgelüftet, bevorzugt bei einer erhöhten Temperatur. Dieses Ablüften wird üblicherweise auch Konditionierung genannt.

Es ist aber wesentlich, dass das aufgebrachte Beschichtungsmittel (K) nach seiner Applikation und vor dem Verfahrensschritt II getrocknet und/oder partiell vernetzt wird, wodurch eine noch nicht endvernetzte Beschichtung (KT) erzeugt wird.

Die so erhaltene Beschichtung (KT) darf nicht mehr fließen und durch eine ggf. aufgebrachte Schutzfolie nicht geprägt werden. Dadurch ist gewährleistet, dass Formteile erhalten werden, die in ihrem folienseitigen Erscheinungsbild den Anforderungen an eine so genannte Class-A-Oberfläche genügen.

Für die Trocknung bzw. Konditionierung der nassen pigmentierten Beschichtungen sowie der nassen transparenten Beschichtungen werden bevorzugt thermische und/oder Konvektionsverfahren verwendet, wobei übliche und bekannten Vorrichtungen, wie Durchlauföfen, NIR- und IR-Heizstrahler, Gebläse und Blastunnel, eingesetzt werden. Diese Vorrichtungen können auch miteinander kombiniert werden.

Üblicherweise erfolgt die Trocknung bzw. Konditionierung der transparenten Beschichtung derart, dass die Beschichtung bei Umgebungstemperatur (im Allgemeinen 25°C) für eine Zeit von 2 bis 30 Minuten abgelüftet wird und anschließend bei erhöhter Temperatur (bevorzugte Ofentemperatur von 80 bis 140 °C) während einer Zeit von 5 bis 30 Minuten getrocknet wird.

Bezüglich eines bevorzugt eingesetzten Verfahrens zur Applikation und Trocknung der pigmentierten Beschichtungsmittel (P) und der Beschichtungsmittel (K) sei auch auf die noch nicht veröffentlichte deutsche Patentanmeldung mit dem Aktenzeichen 10 2004 010 787.4, Seite 16, Zeile 4, bis Seite 25, Zeile 8, verwiesen.

Besonders bevorzugt erfolgt dabei die Applikation und Konditionierung des pigmentierten Beschichtungsmittels (P) und des vernetzbaren Beschichtungsmittels (K) demnach derart, dass
a. das pigmentierte Beschichtungsmittel (P) auf die Trägerfolie aufgetragen wird, wodurch eine nasse pigmentierte Schicht 1a resultiert, die auf einen Restgehalt an flüchtigen Substanzen von x < 10 Gew.-%, bezogen auf die pigmentierte Schicht, eingestellt wird, wodurch eine konditionierte pigmentierte Schicht 1b resultiert,
b. der Verbund aus Trägerfolie und konditionierter Schicht 1b auf eine Temperatur von < 50 °C, bevorzugt < 35°C, an der Oberfläche der Schicht 1 b eingestellt wird,
c. gegebenenfalls ein zweites pigmentiertes Beschichtungsmittel (P) oder dasselbe pigmentierte Beschichtungsmittel (P) zum zweiten Mal auf die konditionierte und temperierte Schicht 1b aufgetragen wird, wodurch eine nasse pigmentierte Schicht 2a resultiert, die auf einen Restgehalt an flüchtigen Substanzen von y < 10 Gew.-%, bezogen auf die pigmentierte Schicht, eingestellt wird, wodurch eine konditionierte Schicht 2b resultiert,
d. gegebenenfalls der Verbund aus Trägerfolie und konditionierten Schichten 1b und 2b auf eine Temperatur von < 50 °C, bevorzugt < 35°C, an der Oberfläche der Schicht 2b eingestellt wird,
e. das vernetzbare Beschichtungsmittel (K) auf die konditionierte und temperierte Schicht 1b oder 2b aufgetragen wird, wodurch eine nasse Schicht 3a resultiert, die auf einen Restgehalt an flüchtigen Substanzen von z < 5 Gew.-%, bezogen auf die Schicht des Beschichtungsmittels (K), eingestellt wird, wodurch eine konditionierte, verformbare, thermisch und/oder mit aktinischer Strahlung härtbare Schicht 3b resultiert.

Dieses Verfahren wird besonders bevorzugt derart ausgeführt, dass man
im Verfahrensschritt a
im ersten Trocknungsabschnitt eine durchschnittliche Trocknungsrate von 10 bis 40 Gew.-%/min, bezogen auf den Gesamtgehalt an flüchtigen Substanzen der applizierten pigmentierten Schicht, bis ein Restgehalt an flüchtigen Substanzen von x = 12 bis 30 Gew.-%, bezogen auf die pigmentierte Schicht, erreicht ist, und
im letzten Trocknungsabschnitt eine durchschnittliche Trocknungsrate von 1 bis 6 Gew-%/min, bezogen auf den Gesamtgehalt an flüchtigen Substanzen der applizierten pigmentierten Schicht, bis ein Restgehalt an flüchtigen Substanzen von x < 10 Gew.-%, besonders bevorzugt < 7 Gew.%, insbesondere < 5 Gew.%, jeweils bezogen auf die pigmentierte Schicht, erreicht ist,
und/oder im Verfahrensschritt c
im ersten Trocknungsabschnitt eine durchschnittliche Trocknungsrate von 10 bis 40 Gew.-%/min, bezogen auf den Gesamtgehalt an flüchtigen Substanzen der applizierten Schicht, bis ein Restgehalt an flüchtigen Substanzen von y = 12 bis 30 Gew.-%, bezogen auf die pigmentierte Schicht, erreicht ist, und
im letzten Trocknungsabschnitt eine durchschnittliche Trocknungsrate von 1,5 bis 4 Gew-%/min, bezogen auf den Gesamtgehalt an flüchtigen Substanzen der applizierten pigmentierten Schicht, bis ein Restgehalt an flüchtigen Substanzen von y < 10 Gew.-%, besonders bevorzugt < 7 Gew.-%, insbesondere < 5 Gew.-%, jeweils bezogen auf die pigmentierte Schicht, erreicht ist,
und/oder im Verfahrensschritt e
im ersten Trocknungsabschnitt eine durchschnittliche Trocknungsrate von 10 bis 30 Gew.-%/min, bezogen auf den Gesamtgehalt an flüchtigen Substanzen der applizierten Schicht des Beschichtungsmittel (K), bis ein Restgehalt an flüchtigen Substanzen von z = 10 bis 15 Gew.-%, bezogen auf die Schicht des Beschichtungsmittels (K), erreicht ist, und
im letzten Trocknungsabschnitt eine durchschnittliche Trocknungsrate von 0,5 bis 3 Gew-%/min, bezogen auf den Gesamtgehalt an flüchtigen Substanzen der applizierten Schicht des Beschichtungsmittels (K), bis ein Restgehalt an flüchtigen Substanzen von z < 7 Gew.-%, besonders bevorzugt < 5 Gew.-%, insbesondere < 3 Gew.%, jeweils bezogen auf die Schicht des Beschichtungsmittels (K), erreicht ist,
anwendet.

Mit dem Verfahrensschritt e wird bevorzugt die noch nicht endvernetzte Beschichtung (KT) erhalten.

Die im Verlauf des erfindungsgemäßen Verfahrens resultierenden Verbunde aus Trägerfolie und pigmentierter Schicht können vor der Applikation der jeweils nächsten Schicht aufgewickelt, zwischengelagert, transportiert und einer anderen Applikationsvorrichtung zugeführt werden, worin sie mit dieser nächsten Schicht beschichtet werden. Zu diesem Zweck können die Verbunde mit Schutzfolie bedeckt werden, die vor der Applikation der nächsten Schicht wieder abgezogen werden.

Vorzugsweise wird aber das erfindungsgemäße Verfahren in einer kontinuierlichen Anlage durchgeführt, die alle notwendigen Applikationsvorrichtungen und Vorrichtungen zur Konditionierung enthält. Darüber hinaus enthält diese kontinuierliche Anlage übliche und bekannte Vorrichtungen für die Zufuhr der pigmentierten und transparenten Beschichtungsmittel zu den Applikationsvorrichtungen, Abwickelvorrichtungen für die Trägerfolien und Schutzfolien und Aufwickelvorrichtungen für die mehrschichtigen Folien F, Antriebsvorrichtungen für die Bewegung der Folien und gegebenenfalls der Applikationsvorrichtungen, Absaugvorrichtungen für die flüchtigen Substanzen, Kühlgebläse und/oder Kühlwalzen für die Einstellung der Oberflächentemperatur der konditionierten Lackschichten, Mess- und Regelvorrichtungen sowie gegebenenfalls Vorrichtungen für die Abschirmung von aktinischer Strahlung.

### Verfahrensschritte II bis IV

Vor dem Verfahrenschritt II wird die vorstehend beschriebene in Stufe I. hergestellte Folie (F) bevorzugt in ein geöffnetes Formwerkzeug, insbesondere ein Tiefziehwerkzeug oder ein Thermoformwerkzeug, eingelegt. Zu diesem Zweck kann die Folie (F) von einer Rolle gewickelt und in geeignet dimensionierte Stücke zugeschnitten werden. Danach können die Folie (F) bzw. die zugeschnittenen Stücke - insbesondere in dem Tiefziehwerkzeug oder Thermoformwerkzeug - vorgeformt, insbesondere an die Konturen der Hinterfütterwerkzeuge angepasst werden. Diese dreidimensional vorgeformten Stücke werden dann im Verfahrensschritt II in ein Werkzeug, insbesondere in ein Hinterfütterwerkzeug, eingelegt. Es ist aber auch möglich, die Folie (F) bzw. zugeschnittene Stücke der Folie (F) direkt, d.h. ohne vorherige dreidimensionale Verformung, im Verfahrensschritt II in ein Werkzeug, insbesondere ein Hinterfütterwerkzeug bzw. Formwerkzeug, einzulegen und direkt in diesem Werkzeug zu verformen.

Im Verfahrenschritt III wird das Werkzeug geschlossenen, und die der Oberfläche (T1) abgewandte Seite (T2) der thermoplastischen Trägerfolie (T) wird mit einem flüssigen oder erweichten Kunststoffmaterial (KM) in Berührung gebracht, wodurch die beschichtete thermoplastische Trägerfolie (T) ggf. geformt und mit dem Kunststoffmaterial (KM) haftfest verbunden wird. Anschließend läßt man das Kunststoffmaterial (KM) sich verfestigen.

Im Verfahrenschritt IV wird das in Stufe III. erhaltene Formteil dem Werkzeug entnommen. Es kann danach unmittelbar weiterverarbeitet oder bis zur Durchführung des Verfahrenschritts V gelagert werden.

Die Verfahrensschritte II bis IV sind dem Fachmann bekannt und auch in einer Vielzahl von Literaturstellen beschrieben. Beispielhaft sei hier nur auf die DE-A-101 13 273, Seite 5, Zeile 47, bis Seite 7, Zeile 35, verwiesen.

### Verfahrensschritt V

Im Verfahrenschritt V wird die Beschichtung (KT) endvernetzt. Dies erfolgt zu einem beliebigen Zeitpunkt im Verlaufe des Verfahrens. Die Vernetzung kann dabei auch in zwei oder mehreren Schritten erfolgen, so dass - ggf. im Anschluß an eine oder mehrere Teilhärtungen- die Endvernetzung erfolgt. Gegebenenfalls kann in diesem Verfahrensschritt auch die pigmentierte Beschichtung (P) vernetzt oder nachvernetzt werden.

Wie bereits bei der Trocknung der transparenten Beschichtung (KT) beschrieben, ist es erfindungswesentlich, dass die Beschichtung (KT) noch nicht endvernetzt ist, dass (KT) aber gleichzeitig eine solche Beständigkeit aufweist, dass sie nicht mehr fließt, und dass sie durch eine ggf. aufgebrachte Schutzfolie nicht geprägt wird.

Diese nicht endvernetzte Beschichtung (KT) kann im Verfahrenschritt (I) und/oder nach dem Verfahrenschritt (I) und/oder im Verfahrenschritt (III) und/oder nach dem Verfahrenschritt (IV) endvernetzt werden.

Die noch nicht endvernetzte transparente Beschichtung (KT) weist aber eine im Vergleich zu der endvernetzten Beschichtung (KE) verbesserte Thermoformbarkeit auf. Vorzugsweise wird daher die Beschichtung (KT) nach der Verformung, insbesondere nach der Anpassung der Folie (F) an die Kontur des Werkzeugs, in das die Folie (F) im Verfahrensschritt (II) eingelegt wird, endvernetzt. Da aber die noch nicht endvernetzte transparente Beschichtung (KT) eine im Vergleich zu der endvernetzten Beschichtung (KE) verringerte mechanische Belastbarkeit aufweist und beim Hinterspritzen schon aufgrund der üblicherweise angewandten hohen Drucke eine möglichst hohe Belastbarkeit erwünscht ist, um Beschädigungen der Folie (F) zu vermeiden und damit die geforderte Class-A-Oberfläche zu gewährleisten, ist es außerdem bevorzugt, die Endvernetzung vor dem Hinterspritzen, also vor dem Verfahrensschritt (III), insbesondere auch vor dem Verfahrensschritt (II), aber nach dem Thermoformen und/oder nach dem Tiefziehen, durchzuführen.

Ferner ist es möglich, den Verfahrensschritt V bei einer erhöhten Temperatur, bevorzugt bei einer Temperatur zwischen 25 und 150 °C, insbesondere zwischen 40 und 120 °C und ganz besonders bevorzugt zwischen 50 und 100 °C, durchzuführen. Die erhöhte Temperatur kann dabei durch gezielte Erwärmung, beispielsweise mittels IR Strahlern, erwärmter Luft oder anderen üblichen Vorrichtungen erzielt werden. Es ist aber auch möglich, den Verfahrensschritt V unmittelbar im Anschluß an den Verfahrensschritt IV durchzuführen und so die durch das Hinterspritzen hervorgerufene Temperaturerhöhung auszunutzen.

Vorzugsweise erfolgt die Endvernetzung des Beschichtungsmittels (K) mittels energiereicher Strahlen, insbesondere mittels UV-Strahlung. Besonders bevorzugt wird die Endvernetzung wie in der WO 03/016095 A1, Seite 27, Zeilen 19, bis Seite 28, Zeile 24, beschrieben, durchgeführt. Es ist aber auch möglich, die Endvernetzung ausschließlich oder zusätzlich zur Strahlenhärtung thermisch durchzuführen. Die thermische Endvernetzung erfolgt dabei vorzugsweise während und/oder unmittelbar im Anschluß an den Verfahrensschritt IV, um so die durch das Hinterspritzen hervorgerufene Temperaturerhöhung auszunutzen.

Bevorzugt wird bei der Endvernetzung mittels Strahlen eine Strahlendosis von 100 bis 6.000, vorzugsweise 200 bis 3.000, bevorzugt 300 bis 2.500 und besonders bevorzugt 500 bis 2.000 mJcm⁻² eingesetzt, wobei der Bereich < 2.000 mJcm⁻² ganz besonders bevorzugt ist.

Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Vol.-%). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen in den erfindungsgemäßen vernetzten Massen entstehen können. Es ist daher von Vorteil, den Sauerstoffgehalt der Atmosphäre nicht auf Null Vol.-% abzusenken.

### Verwendung der Formteile

Die nach dem erfindungsgemäßen Verfahren erhaltenen Formteile sind außerordentlich breit anwendbar. So können sie hervorragend als Karosserieinnen- oder-außenbauteile, als Bauteile für den Schiff- und Flugzeugbau, als Bauteile für Schienenfahrzeuge oder als Bauteile für Haushalts- und Elektrogeräte, für Bauwerke, Fenster, Türen, Möbel und Gebrauchsgegenständen jeglicher Art eingesetzt werden. Bevorzugt werden sie als Karosserieinnen- oder -außenbauteile bzw. Module, insbesondere von Pkw, Lastkraftwagen und Omnibussen, eingesetzt.

Da die Formteile in ihrem folienseitigem Erscheinungsbild den Anforderungen an eine sogenannte Class-A-Oberfläche genügen und die üblicherweise an eine Automobillackierung gestellten Anforderungen erfüllen, eignen sie sich insbesondere hervorragend als Anbauteile für Pkw-Karosserien, insbesondere für Karosserien von Pkw der Oberklasse, wie z. B. für die Herstellung von Dächern, Heckklappen, Motorhauben, Kotflügeln, Stoßstangen u.ä..

### Beispiel 1

### Die Herstellung der organischen Lösung eines Urethanacrylats (organische Lösung der Komponente (KK1))

Es wurde ein Urethanacrylat aus den nachfolgend genannten Aufbaukomponenten hergestellt, indem das hydrierte Bisphenol-A in 2-Hydroxyethylacrylat bei 60°C unter Rühren grob dispergiert wurde. Zu dieser Suspension wurden die Isocyanate, Hydrochinonmonomethylether, 1,6-di-tert.-Butyl-para-Kresol und Methylethylketon gegeben. Nach der Zugabe von Dibutylzinndilaurat erwärmte sich der Ansatz. Bei Innentemperatur von 75 °C wurde mehrere Stunden gerührt, bis sich der NCO-Wert der Reaktionsmischung praktisch nicht mehr veränderte. Die gegebenenfalls nach der Umsetzung noch vorhandenen freien Isocyanatgruppen wurden durch Zugabe einer geringen Menge an Methanol umgesetzt.
104,214 g hydriertes Bisphenol-A (entsprechend 0,87 Äquivalenten Hydroxylgruppen),
147,422 g (entsprechend 0,77 Äquivalenten Isocyanatgruppen) Basonat ® HI 100 der Firma BASF AG = handelsübliches Isocyanurat von Hexamethylendiisocyanat mit einem NCO-Gehalt von 21,5 - 22,5% (DIN EN ISO 11909),
147,422 g (entsprechend 0,77 Äquivalenten Isocyanatgruppen) Basonat ® HB 100 der Firma BASF AG = handelsübliches Biuret von Hexamethylendiisocyanat mit einem NCO-Gehalt von 22 - 23% (DIN EN ISO 11909),
124,994 g (entsprechend 0,51 Äquivalenten Isocyanatgruppen) Vestanat ® T1890 der Firma Degussa = handelsübliches Isocyanurat von Isophorondiisocyanat mit einem NCO-Gehalt von 11,7 -12,3% (DIN EN ISO 11909)
131,378 g 2-Hydroxyethylacrylat (entsprechend 1,13 Äquivalenten Hydroxylgruppen)
0,328 g Hydrochinonmonomethylether (0,05 % auf fest)
0,655g 1,6-di-tert.-Butyl-para-Kresol (0,1 % auf fest)
Methylethylketon (70% Festkörper)
0,066 g Dibutylzinndilaurat (0,01 % auf fest)
4,500g Methanol (entsprechend 0,14 Äquivalenten Hydroxylgruppen)

Die so erhaltene Komponente (KK1) weist folgende Kennzahlen auf:
- im Mittel 4,6 ethylenisch ungesättigte Doppelbindungen pro Molekül
- einen Doppelbindungsgehalt von 1,74 mol Doppelbindungen pro 1.000 g Urethanacrylat-Festkörper
- im Mittel 2,2 Verzweigungspunkte pro Molekül
- 25 Gew.-% cyclische Strukturelemente, bezogen auf den Festkörpergehalt des Urethanacrylats

Unter Verwendung dieser Komponente (KK) wurde gemäß den in der Beschreibung enthaltenen Angaben die Mischung (M) dadurch hergestellt, dass in einem geeigneten Rührgefäß 143,00 Gewichtsteile der oben beschriebenen organischen Lösung der Komponente (KK), 70%ig in Methylethylketon, vorgelegt wurden.

Zur Vorlage wurde innerhalb von 30 Minuten eine Mischung aus 1,0 Gewichtsteilen Tinuvin ® 292 (handelsübliches HALS Lichtschutzmittel der Firma Ciba Specialty Chemicals auf Basis einer Mischung von Bis-(1,2,2,6,6-pentamethyl-4-piperidinyl)sebacat und Methyl(1,2,2,6,6-pentamethyl-4-piperidinyl)sebacat), 2,4 Gewichtsteilen der handelsüblichen Lichtschutzmittellösung Tinuvin ® 400 (handelsübliches Lichtschutzmittel der Firma Ciba Specialty Chemicals auf Basis einer Mischung von 2-(4-((2-Hydroxy-3-dodecyloxypropyl)oxy)-2-hydroxyphenyl)-4,6-bis(2,4-dimethylphenyl)-1,3,5-triazin und 2-(4-((2-Hydroxy-3-tridecyloxypropyl)oxy)-2-hydroxyphenyl)-4,6-bis(2,4-dimethylphenyl)-1,3,5-triazin, 85%ig in 1-Methoxy-2-propanol), 0,8 Gewichtsteilen Lucirin ® TPO-L (handelsüblicher Photoinitiator der Firma BASF Aktiengesellschaft auf Basis Ethyl-2,4,6-Trimethylbenzoylphenyl-phosphinat), 2,40 Gewichtsteilen Irgacure ® 184 (handelsüblicher Photoinitiator der Firma Ciba Specialty Chemicals auf Basis 1-Hydroxy-cyclohexyl-phenylketon), eingesetzt in Form von 3,0 Teilen einer 80%igen Lösung in Aceton, und 0,2 Gewichtsteilen eines handelsüblichen polyethermodifizierten Polydimethylsiloxans (eingesetzt in Form von 1,7 Teilen einer handelsüblichen 12,5%ige Lösung des polyethermodifizierten Polydimethylsiloxans in Xylol/Monophenylgykol 7/2 = Byk ® 306 der Firma Byk Chemie) unter ständigem Rühren bei Raumtemperatur zugegeben und mit 3-Butoxy-2-propanol auf einen Festkörpergehalt von 48% eingestellt. Anschließend wurde die resultierende Mischung während 30 Minuten bei Raumtemperatur gerührt.

Zur Bestimmung des Verhältnisses von Speichermodul G(MT)' zu Verlustmodul G(MT)" wird die Mischung (M) mit einem Linecoater der Firma Coatema GmbH, Dormagen mittels Messergießer mit einer Naßschichtdicke von 200 µm auf eine Polyethylenterephthalatfolie aufgerakelt. Die beschichtete Folie fährt dann mit einer Geschwindigkeit von 0,2 m/min in den Flash-Off-Kanal und verweilt dort für 20 Minuten bei einer Temperatur von 25 °C und einer relativen Luftfeuchte von 65 %. Anschließend fährt die beschichtete Folie für 15 Minuten in den Ofen und wird dort bei einer Ofentemperatur von 119 °C getrocknet. Die getrocknete Beschichtung (MT) wird danach von der beschichteten Folie mit einem Schaber abgeschabt und zur rheologischen Prüfung gegeben.

Die Durchführung der Messungen erfolgt mit dem Gerät MCR 300 der Firma Physica (Platte-Platte-Messsystem, 25 mm Durchmesser) mit einer Kreisfrequenz von 10 s⁻¹ und einer Amplitude von 0,1%. Die Heizrate beträgt bei den rheologischen Messungen 2°C pro Minute.

Das so ermittelte Verhältnis von Speichermodul G(MT)' zu Verlustmodul G(MT)" beträgt bei einer Temperatur von 20 °C 66.

Der Speichermodul E(ME)' im gummielastischen Bereich wird dadurch bestimmt, dass die Mischung (M) auf Polypropylen appliziert und endvernetzt wird. Die Schichtdicke der zur Messung eingesetzten freien Filme beträgt dabei im Allgemeinen 40 ± 10 µm. Die Heizrate beträgt dabei 2°C pro Minute. Die Durchführung der Messungen erfolgt mit dem Gerät DMTA V der Firma Rheometrics Scientific mit einer Frequenz von 1 Hz und einer Amplitude von 0,2%.

Der Speichermodul E(ME)' im gummielastischen Bereich beträgt 2,5* 10^{7,0} Pa.

### Die Herstellung eines mit UV-Strahlung härtbaren Beschichtungsmittels (K1)

Die oben beschriebene Mischung (M) wurde direkt als Beschichtungsmittel (K1) eingesetzt.

### Die Herstellung einer beschichteten, thermoplastischen Trägerfolie 1

Als Trägerfolie wurde eine thermoplastische Folie aus Luran ® S 778 TE der Firma BASF Aktiengesellschaft einer Dicke von 800 µm verwendet. Die zu beschichtende Oberfläche der Trägerfolie wurde einer Coronavorbehandlung mit 0,5 Kilowatt unterzogen.

Die Folie wurde einseitig mit einem Metallic-Wasserbasislack (Farbton: »Silbermetallic«) beschichtet. Der Basislack wurde mit Hilfe einer Kastenrakel einer Breite von 37 cm bei einer Bandgeschwindigkeit von 0,5 m/min auf die Trägerfolie appliziert. Die Applikation wurde bei einer schwachen Luftströmung von 0,2 m/s, einer konstanten Temperatur von 21 ± 1 °C und einer konstanten relativen Luftfeuchte 65 ± 5% durchgeführt. Die Schichtdicke der resultierenden nassen Basislackschicht 1a betrug 100 µm. Die nasse Basislackschicht 1a wurde während 3 Minuten bei diesen Bedingungen abgelüftet und anschließend, wie auf Seite 28, Zeilen 4 bis 23, der noch nicht veröffentlichten deutschen Patentanmeldung mit dem Aktenzeichen 10 2004 010 787.4 beschrieben, bis zu einem Restgehalt an flüchtigen Substanzen von x = 4 Gew.-%, bezogen auf die Basislackschicht, getrocknet. Die resultierende konditionierte Basislackschicht 1 b einer Schichtdicke von ca. 20 µm wurde mit Kühlwalzen auf eine Oberflächentemperatur < 30 °C eingestellt.

Auf die konditionierte und temperierte Basislackschicht 1 b wurde derselbe Basislack unter den folgenden Bedingungen mit Hilfe eines Systems für die pneumatische Spritzapplikation aufgetragen:
- Ausflussrate: 100 ml/min;
- Luftdrücke: Zerstäuberluft: 2,5 bar; Hornluft: 2,5 bar;
- Verfahrgeschwindigkeit der Düsen so hoch, dass eine Überlappung der Sprühstrahlen von 60% resultiert;
- Abstand Düse - Folie: 30 cm.

Die Applikation wurde bei einer schwachen Luftströmung von 0,5 m/s (senkrechte Anströmung der Folie), einer konstanten Temperatur von 21 ± 1 °C und einer konstanten relativen Luftfeuchte 65 ± 5% durchgeführt. Die Schichtdicke der resultierenden nassen Basislackschicht 2a betrug 50 ± 2 µm. Die Basislackschicht 2a wurde unter diesen Bedingungen während 3 Minuten abgelüftet und anschließend, wie auf Seite 29, Zeilen 12 bis 30 der noch nicht veröffentlichten deutschen Patentanmeldung mit dem Aktenzeichen 10 2004 010 787.4 beschrieben, bis zu einem Restgehalt an flüchtigen Substanzen von y = 4 Gew.-%, bezogen auf die Basislackschicht, getrocknet. Dabei lagen die Lufttemperatur bei 90 °C, die Luftfeuchte bei 10g/min und die Luftgeschwindigkeiten bei 10 m/s. Die resultierende konditionierte Basislackschicht 2b einer Schichtdicke von ca. 10 µm wurde mit Kühlwalzen auf eine Oberflächentemperatur < 30 °C eingestellt.

Auf die konditionierte und temperierte Basislackschicht 2b wurde mit Hilfe einer Kastenrakel einer Breite von 37 cm das oben beschriebene Beschichtungsmittel (K) aufgetragen. Die Applikation wurde bei einer schwachen Luftströmung von 0,2 m/s, einer konstanten Temperatur von 21 ± 1 °C und einer konstanten relativen Luftfeuchte 65 ± 5% durchgeführt. Die Schichtdicke der resultierenden nassen Klarlackschicht 3a betrug 120 µm. Sie wurde unter den genannten Bedingungen während 6 Minuten abgelüftet und anschließend, wie auf Seite 30, Zeilen 10 bis 29 der noch nicht veröffentlichten deutschen Patentanmeldung mit dem Aktenzeichen 10 2004 010 787.4 beschrieben, bis zu einem Restgehalt an flüchtigen Substanzen von z = 2,5 Gew.-%, bezogen auf die Klarlackschicht, getrocknet. Dabei lag die Lufttemperatur im Ofen bei 119 °C für alle Trocknungsstufen. Die resultierende getrocknete, aber noch nicht endvernetzte Beschichtung (KT) einer Schichtdicke von 60 µm wurde mit Kühlwalzen auf eine Oberflächentemperatur < 30 °C eingestellt und mit der in der DE-A-10335620, Beispiel 1 beschriebenen Schutzfolie aus Polypropylen (Handelsprodukt GH-X 527 der Firma Bischof + Klein, Lengerich) beschichtet.

Die resultierende mehrschichtige Folie (F) wurde zu einer Rolle gewickelt und in dieser Form bis zur weiteren Verwendung gelagert.

### Die Herstellung von Kunststoffformteilen

Die mehrschichtige Folie (F) wurde vorgeformt. Anschließend wurde die transparente, noch nicht endvernetzte Beschichtung durch die Schutzfolie hindurch mit UV-Strahlung partiell vernetzt. Als Positivform wurde ein Würfel verwendet. Das resultierende vorgeformte Teil wurde in ein Hinterspritzwerkzeug eingelegt. Das Werkzeug wurde geschlossen, und der Würfel wurde mit einem flüssigen Kunststoffmaterial hinterspritzt. Das resultierende Kunststoffformteil wurde abgekühlt und dem Werkzeug entnommen. Anschließend wurde die partiell vernetzte transparente Beschichtung mit UV-Strahlung endvernetzt. Danach wurde die Schutzfolie abgezogen.

Die so hergestellten Kunststoffformteile wiesen eine hochglänzende Oberfläche auf, die frei von Oberflächenstörungen war.

### Beispiel 2

### Die Herstellung der organischen Lösung eines Urethanacrylats (organische Lösung der Komponente (KK2))

Es wurde ein Urethanacrylat aus den nachfolgend genannten Aufbaukomponenten hergestellt, indem das hydrierte Bisphenol-A in 4-Hydroxybutylacrylat und Pentaerythrit-tri/tetra-acrylat bei 60°C unter Rühren grob dispergiert wurde. Zu dieser Suspension wurden die Isocyanate, Hydrochinonmonomethylether, 1,6-di-tert.-Butyl-para-Kresol und Butylacetat gegeben. Nach der Zugabe von Dibutylzinndilaurat erwärmte sich der Ansatz. Bei Innentemperatur von 75 °C wurde mehrere Stunden gerührt, bis sich der NCO-Wert der Reaktionsmischung praktisch nicht mehr veränderte. Die gegebenenfalls nach der Umsetzung noch vorhandenen freien Isocyanatgruppen wurden durch Zugabe einer geringen Menge an Methanol umgesetzt.
227,7 g hydriertes Bisphenol-A (entsprechend 1,89 Äquivalenten Hydroxylgruppen),
178,2 g 4-Hydroxybutylacrylat (entsprechend 1,24 Äquivalenten Hydroxylgruppen)
701,3 g Pentaerythrittri-/tetraacrylat (OH-Zahl = 110 mg(KOH)/g, entsprechend 1,37 Äquivalenten Hydroxylgruppen)
325,69 g (entsprechend 1,71 Äquivalenten Isocyanatgruppen) Basonat ® HI 100 der Firma BASF AG = handelsübliches Isocyanurat von Hexamethylendiisocyanat mit einem NCO-Gehalt von 21,5 - 22,5% (DIN EN ISO 11909), 325,69 g (entsprechend 1,74 Äquivalenten Isocyanatgruppen) Basonat ® HB 100 der Firma BASF AG = handelsübliches Biuret von Hexamethylendiisocyanat mit einem NCO-Gehalt von 22 - 23% (DIN EN ISO 11909),
147,38 g (entsprechend 1,13 Äquivalenten Isocyanatgruppen) Desmodur® W der Firma Bayer MaterialScience AG = handelsübliches Dicyclohexylmethandiisocyanat mit einem NCO-Gehalt von ≥ 31,8%
0,953 g Hydrochinonmonomethylether (0,05 % auf fest)
1,906 g 1,6-di-tert.-Butyl-para-Kresol (0,1 % auf fest)
816,84 g Butylacetat (entspricht 70% Festkörper)
0,7624 g Dibutylzinndilaurat (0,04 % auf fest)
17,1 g Methanol (entsprechend 0,53 Äquivalenten Hydroxylgruppen)

Die so erhaltene Komponente (KK2) weist folgende Kennzahlen auf:
- im Mittel 7,1 ethylenisch ungesättigte Doppelbindungen pro Molekül
- einen Doppelbindungsgehalt von 2,92 mol Doppelbindungen pro 1.000 g Urethanacrylat-Festkörper
- im Mittel 1,5 Verzweigungspunkte pro Molekül
- 16 Gew.-% cyclische Strukturelemente, bezogen auf den Festkörpergehalt des Urethanacrylats

### Die Herstellung eines mit UV-Strahlung härtbaren Beschichtungsmittels (K2)

In einem geeigneten Rührgefäß wurden 143,00 Gewichtsteile der oben beschriebenen organischen Lösung des Urethanacrylats (KK2) vorgelegt. Zur Vorlage wurde innerhalb von 30 Minuten eine Mischung aus 1,0 Gewichtsteilen Tinuvin ® 292 (handelsübliches HALS Lichtschutzmittel der Firma Ciba Specialty Chemicals auf Basis einer Mischung von Bis-(1,2,2,6,6-pentamethyl-4-piperidinyl)sebacat und Methyl(1,2,2,6,6-pentamethyl-4-piperidinyl)sebacat), 2,35 Gewichtsteilen Tinuvin ® 400 (handelsübliches Lichtschutzmittel der Firma Ciba Specialty Chemicals auf Basis einer 85%igen Lösung in 1-Methoxy-2-propanol einer Mischung von 2-(4-((2-Hydroxy-3-dodecyloxypropyl)oxy)-2-hydroxyphenyl)-4,6-bis(2,4-dimethylphenyl)-1,3,5-triazin und 2-(4-((2-Hydroxy-3-tridecyloxypropyl)oxy)-2-hydroxyphenyl)-4,6-bis(2,4-dimethylphenyl)-1,3,5-triazin), 0,8 Gewichtsteilen Lucirin ® TPO-L (handelsüblicher Photoinitiator der Firma BASF Aktiengesellschaft auf Basis von Ethyl-2,4,6-Trimethylbenzoyl-phenyl-phosphinat), 2,40 Gewichtsteilen Irgacure ® 184 (handelsüblicher Photoinitiator der Firma Ciba Specialty Chemicals auf Basis 1-Hydroxy-cyclohexyl-phenylketon), eingesetzt in Form von 3,0 Teilen einer 80%igen Lösung in Aceton, und 0,40 Gewichtsteilen einer handelsüblichen 52%igen Lösung eines polyethermodifizierten Polymethylalkyksiloxans (= Byk ® 325, handelsübliches Additiv der Firma Byk Chemie) unter ständigem Rühren bei Raumtemperatur zugegeben und mit 1-Methoxypropyl-2-acetat auf einen Festkörpergehalt von 51% eingestellt. Anschließend wurde die resultierende Mischung während 30 Minuten bei Raumtemperatur gerührt.

### 2.2. Herstellung der mit einer Beschichtung versehenen, thermoformbaren Folie 2

Das mit UV Strahlung härtbare Beschichtungsmittel (K2) wurde analog zu Beispiel 1 zur Herstellung einer mit einer Beschichtung versehenen Folie eingesetzt.

## Patentansprüche

1. Verfahren zur Herstellung von Formteilen, insbesondere zur Anwendung im Automobilbau, bei dem man
I. eine eine Beschichtung (B) aufweisende Folie (F) herstellt, indem auf eine ggf. vorbehandelte Oberfläche (T1) einer thermoplastischen Trägerfolie (T)
1. ein pigmentiertes Beschichtungsmittel (P) aufgebracht wird,
2. ein vernetzbares Beschichtungsmittel (K), das eine radikalisch vernetzbare Komponente (KK) enthält und das nach der Endvernetzung eine transparente Beschichtung (KE) ergibt, aufgebracht wird,
3. das in Stufe 2 aufgebrachte Beschichtungsmittel (K) getrocknet und/oder partiell vernetzt wird, wodurch eine noch nicht endvernetzte Beschichtung (KT) erzeugt wird,
II. die in Stufe I. hergestellte Folie (F) in ein geöffnetes Werkzeug einlegt,
III. das Werkzeug geschlossen, die der Oberfläche (T1) abgewandte Seite (T2) der thermoplastischen Trägerfolie (T) mit einem flüssigen oder erweichten Kunststoffmaterial (KM) in Berührung gebracht wird und sich das Kunststoffmaterial verfestigen lassen wird,
IV. das in Stufe III. erhaltene Formteil dem Werkzeug entnommen wird und
V. die Beschichtung (KT) zu einem beliebigen Zeitpunkt im Verlaufe des Verfahrens endvernetzt wird,
wobei das vernetzbare Beschichtungsmittel (K) eine radikalisch vernetzbare Komponente (KK) enthält, die
(i) ein oder mehrere Oligo- und/oder ein oder mehrere Polyurethan(meth)acrylate enthält und
(ii) im Mittel mehr als 1 ethylenisch ungesättigte Doppelbindung pro Molekül,
(iii) ein zahlenmittleres Molekulargewicht von 1.000 bis 10.000 g/mol,
(iv) einen Doppelbindungsgehalt von 1,0 bis 5,0 mol Doppelbindungen pro 1.000 g reaktive Komponente (KK),
(v) im Mittel pro Molekül > 1 Verzweigungspunkt,
(vi) 5- 50 Gew.-%, jeweils bezogen auf das Gewicht der Komponente (KK), cyclische Strukturelemente und
(vii) mindestens ein aliphatisches Strukturelement mit mindestens 6 C-Atomen in der Kette
aufweist, **dadurch gekennzeichnet, dass**
die radikalisch vernetzbare Komponente (KK) H-Brücken bildende Strukturelemente in einer solchen Menge aufweist, dass
1. eine aus der Mischung (M) hergestellte, noch nicht endvernetzte transparente Beschichtung (MT) ein Verhältnis von Speichermodul G(MT)' zu Verlustmodul G(MT)" von 5 bis 200 aufweist, wobei G(MT)' und G(MT)" bei einer Temperatur von 20 °C durch rheologische Oszillationsmessungen mit Hilfe eines Platte-Platte-Messsystems bei einer Heizrate von 2°C pro Minute und einer Kreisfrequenz von 10 s⁻¹ gemessen worden sind, und
2. eine aus der Mischung (M) hergestellte, endvernetzte transparente Beschichtung (ME) ein Speichermodul E(ME)' von 1,0 * 10^{7,0} bis 8,0 * 10^{7,0} Pa aufweist, wobei E(ME)' im gummielastischen Bereich an freien endvernetzten Filmen mit einer Schichtdicke von 40 µm +/-10 µm mit der Dynamisch-Mechanischen-Thermo-Analyse bei einer Heizrate von 2°C pro Minute und einer Frequenz von 1 Hz gemessen worden ist,
wobei die Mischung (M) hergestellt worden ist durch Mischen von 100 Teilen der Komponente (KK), 70%ig in Methylethylketon (entsprechend 143 Teilen der 70%igen Lösung), mit 2,4 Teilen 1-Hydroxy-cyclohexyl-phenyl-keton (eingesetzt in Form von 3,0 Teilen einer 80%igen Lösung in Aceton) und 0,8 Teilen Ethyl-2,4,6-Trimethylbenzoylphenylphosphinat sowie 1,0 Teilen einer Mischung aus Bis(1,2,2,6,6-pentamethyl-4-piperidinyl)sebacat und Methyl(1,2,2,6,6-pentamethyl-4-piperidinyl)sebacat, 2,0 Teilen einer Mischung aus 2-(4-((2-Hydroxy-3-tridecyloxypropyl)oxy)-2-hydroxyphenyl)-4,6-bis(2,4-dimethylphenyl)-1,3,5-triazin und 2-(4-((2-Hydroxy-3-dodecyloxypropyl)oxy)-2-hydroxyphenyl)-4,6-bis(2,4-dimethylphenyl)-1,3,5-triazin (eingesetzt in Form von 2,4 Teilen einer 85%igen Lösung in 1-Methoxy-2-propanol), 0,2 Teilen eines polyethermodifizierten Polydimethylsiloxans (eingesetzt in Form von 1,7 Teilen einer handelsüblichen Lösung in Xylol/Monophenylglykol 7/2 mit einem nichtflüchtigen Anteil von 12,5%) und 70 Teilen 3-Butoxy-2-propanol.

2. Eine Beschichtung (B) aufweisende Folie (F), herstellbar, indem auf eine ggf. vorbehandelte Oberfläche (T1) einer thermoplastischen Trägerfolie (T)
1. ein pigmentiertes Beschichtungsmittel (P) aufgebracht wird,
2. ein vernetzbares Beschichtungsmittel (K), das eine radikalisch vernetzbare Komponente (KK) enthält und das nach der Endvernetzung eine transparente Beschichtung (KE) ergibt, aufgebracht wird,
3. das Beschichtungsmittel (K) zu einer transparenten, aber noch nicht endvernetzten Beschichtung (KT) getrocknet wird,
wobei das vernetzbare Beschichtungsmittel (K) eine radikalisch vernetzbare Komponente (KK) enthält, die
(i) ein oder mehrere Oligo- und/oder ein oder mehrere Polyurethan(meth)acrylate enthält und
(ii) im Mittel mehr als 1 ethylenisch ungesättigte Doppelbindung pro Molekül,
(iii) ein zahlenmittleres Molekulargewicht von 1.000 bis 10.000 g/mol,
(iv) einen Doppelbindungsgehalt von 1,0 bis 5,0 mol Doppelbindungen pro 1.000 g reaktive Komponente (KK),
(v) im Mittel pro Molekül > 1 Verzweigungspunkt,
(vi) 5- 50 Gew.-%, jeweils bezogen auf das Gewicht der Komponente (KK), cyclische Strukturelemente und
(vii) mindestens ein aliphatisches Strukturelement mit mindestens 6 C-Atomen in der Kette
aufweist, **dadurch gekennzeichnet, dass**
die radikalisch vernetzbare Komponente (KK) H-Brücken bildende Strukturelemente in einer solchen Menge aufweist, dass
1. eine aus der Mischung (M) hergestellte, noch nicht endvernetzte transparente Beschichtung (MT) ein Verhältnis von Speichermodul G(MT)' zu Verlustmodul G(MT)" von 5 bis 200 aufweist, wobei G(MT)' und G(MT)" bei einer Temperatur von 20 °C durch rheologische Oszillationsmessungen mit Hilfe eines Platte-Platte-Messsystems bei einer Heizrate von 2°C pro Minute und einer Kreisfrequenz von 10 s⁻¹ gemessen worden sind, und
2. eine aus der Mischung (M) hergestellte, endvernetzte transparente Beschichtung (ME) ein Speichermodul E(ME)' von 1,0 * 10^{7,0} bis 8,0 * 10^{7,0} Pa aufweist, wobei E(ME)' im gummielastischen Bereich an freien endvernetzten Filmen mit einer Schichtdicke von 40 µm +/-10 µm mit der Dynamisch-Mechanischen-Thermo-Analyse bei einer Heizrate von 2°C pro Minute und einer Frequenz von 1 Hz gemessen worden ist,
wobei die Mischung (M) hergestellt worden ist durch Mischen von 100 Teilen der Komponente (KK), 70%ig in Methylethylketon (entsprechend 143 Teilen der 70%igen Lösung), mit 2,4 Teilen 1-Hydroxy-cyclohexyl-phenyl-keton (eingesetzt in Form von 3,0 Teilen einer 80%igen Lösung in Aceton) und 0,8 Teilen Ethyl-2,4,6-Trimethylbenzoylphenylphosphinat sowie 1,0 Teilen einer Mischung aus Bis(1,2,2,6,6-pentamethyl-4-piperidinyl)sebacat und Methyl(1,2,2,6,6-pentamethyl-4-piperidinyl)sebacat, 2,0 Teilen einer Mischung aus 2-(4-((2-Hydroxy-3-tridecyloxypropyl)oxy)-2-hydroxyphenyl)-4,6-bis(2,4-dimethylphenyl)-1,3,5-triazin und 2-(4-((2-Hydroxy-3-dodecyloxypropyl)oxy)-2-hydroxyphenyl)-4,6-bis(2,4-dimethylphenyl)-1,3,5-triazin (eingesetzt in Form von 2,4 Teilen einer 85%igen Lösung in 1-Methoxy-2-propanol), 0,2 Teilen eines polyethermodifizierten Polydimethylsiloxans (eingesetzt in Form von 1,7 Teilen einer handelsüblichen Lösung in Xylol/Monophenylglykol 7/2 mit einem nichtflüchtigen Anteil von 12,5%) und 70 Teilen 3-Butoxy-2-propanol.

3. Verfahren nach Anspruch 1 oder Folie nach Anspruch 2, **dadurch gekennzeichnet, dass** die radikalisch vernetzbare Komponente (KK) mindestens eine H-Brücken bildende Struktureinheit ausgewählt aus der Gruppe Urethan-, Biuret-, Allophanat-, Harnstoff-, Carbamat-, Carbonat-, Amid-, Ether-, Ester-, OH-, COOH-, und/oder ionischen Gruppen und/oder Ionen bildenden Gruppen, bevorzugt mindestens eine Urethangruppe zusammen mit mindestens einer H-Brücken bildenden Struktureinheit ausgewählt aus der Gruppe Allophanatgruppen und/oder Biuretgruppen und/oder Carbamatgruppen und/oder Amidgruppen und/oder Harnstoffgruppen, enthält.

4. Verfahren nach einem der Ansprüche 1 oder 3 oder Folie nach einem der Ansprüche 2 oder 3, **dadurch gekennzeichnet, dass** die radikalisch vernetzbare Komponente (KK) mehr als 2 bis 10,0 Doppelbindungen pro Molekül aufweist und/oder dass die radikalisch vernetzbare Komponente (KK) zusätzlich aliphatische Strukturelemente mit 4 und/oder 5 C-Atomen in der Kette aufweist.

5. Verfahren nach einem der Ansprüche 1 oder 3 bis 4 oder Folie nach einem der Ansprüche 2 bis 4, **dadurch gekennzeichnet, dass** die radikalisch vernetzbare Komponente (KK) als cyclische Strukturelemente monocyclische Strukturelemente mit 4 bis 8 Ringgliedern und/oder di- und/oder tri- und/oder polycyclische Strukturelemente mit 7 bis 18 Ringgliedern aufweist und/oder dass die cyclischen Strukturelemente substituiert sind.

6. Verfahren nach einem der Ansprüche 1 oder 3 bis 5 oder Folie nach einem der Ansprüche 2 bis 5, **dadurch gekennzeichnet, dass** die radikalisch vernetzbare Komponente (KK) als cyclische Strukturelemente
(i) cycloaliphatische Strukturelemente und/oder
(ii) heterocyclische Strukturelemente, insbesondere heterocyclische Strukturelemente, bei denen die Anzahl der Heteroatome pro Ring 1 bis 8 beträgt und/oder bei denen die Heteroatome ausgewählt sind aus der Gruppe Stickstoff und/oder Sauerstoff und/oder Schwefel,
und/oder
(iii) aromatische Strukturelemente
aufweist, wobei bevorzugt der Gehalt an aromatischen Strukturelementen maximal 10 Gew.-%, jeweils bezogen auf das Gewicht der Komponente (KK), beträgt,.

7. Verfahren nach einem der Ansprüche 1 oder 3 bis 6 oder Folie nach einem der Ansprüche 2 bis 6, **dadurch gekennzeichnet, dass** die radikalisch vernetzbare Komponente (KK) als cyclische Strukturelemente Tricyclodekanringe und/oder Cyclohexanringe und/oder Isocyanuratringe und/oder Triazinringe enthält, wobei die cyclischen Strukturelemente ggf. substituiert sein können.

8. Verfahren nach einem der Ansprüche 1 oder 3 bis 7 oder Folie nach einem der Ansprüche 2 bis 7, **dadurch gekennzeichnet, dass** die radikalisch vernetzbare Komponente (KK) als aliphatisches Strukturelement mit mindestens 6 C-Atomen in der Kette aliphatische Strukturelemente mit 6 bis 18 C-Atomen in der Kette, insbesondere Hexamethylenketten, enthält.

9. Verfahren nach einem der Ansprüche 1 oder 3 bis 8 oder Folie nach einem der Ansprüche 2 bis 8, **dadurch gekennzeichnet, dass** die Verzweigungspunkte der radikalisch vernetzbaren Komponente (KK) über die Verwendung von Isocyanaten mit einer Funktionalität größer 2 und/oder über die Verwendung von Isocyanuratringen beim Aufbau der Komponente (KK) eingeführt werden.

10. Verfahren nach einem der Ansprüche 1 oder 3 bis 9 oder Folie nach einem der Ansprüche 2 bis 9, **dadurch gekennzeichnet, daß** die radikalisch vernetzbare Komponente (KK) hergestellt worden ist unter Verwendung von Hexamethylendiisocyanat und/oder Isophorondiisocyanat und/oder Methylen-bis-(4-isocyanatocyclo-hexan) und/oder den entsprechenden Isocyanuraten und/oder Biureten und/oder Allophanaten dieser Isocyanate und/oder unter Verwendung von Hydroxyethylacrylat und/oder 4-Hydroxybutylacrylat und/- oder Pentaerythrittriacrylat und/oder Isopropylidendicyclohexanol.

11. Verfahren nach einem der Ansprüche 1 oder 3 bis 10 oder Folie nach einem der Ansprüche 2 bis 10, **dadurch gekennzeichnet, daß** die radikalisch vernetzbare Komponente (KK) weniger als 5 Gew.-%, bevorzugt weniger als 1 Gew.-%, jeweils bezogen auf das Gewicht der Komponente (KK), und insbesondere im wesentlichen keine nachweisbaren, freien Isocyanatgruppen aufweist.

12. Verfahren nach einem der Ansprüche 1 oder 3 bis 11 oder Folie nach einem der Ansprüche 2 bis 11, **dadurch gekennzeichnet, dass** als pigmentiertes Beschichtungsmittel (P) ein lösemittelhaltiges oder ein wässriges Beschichtungsmittel eingesetzt wird.

13. Verfahren nach einem der Ansprüche 1 oder 3 bis 12 oder Folie nach einem der Ansprüche 2 bis 12, **dadurch gekennzeichnet, dass** das pigmentierte Beschichtungsmittel (P)
(I) ein oder mehrere Lösemittel und/oder Wasser
(II) ein oder mehrere Bindemittel, bevorzugt ein oder mehrere Polyurethanharze und/oder ein oder mehrere Acrylatharze und
(III) ggf. mindestens ein Vernetzungsmittel,
(IV) mindestens ein Pigment sowie
(V) ggf. ein oder mehrere übliche Hilfs- und Zusatzstoffe
enthält.

14. Verfahren nach einem der Ansprüche 1 oder 3 bis 13, **dadurch gekennzeichnet, dass** das pigmentierte Beschichtungsmittel entweder in nur einer Schicht mittels eines nicht gerichteten Applikationsverfahrens oder in 2 oder mehreren Schichten aufgebracht wird, wobei dann die letzte dieser Schichten mittels eines nicht gerichteten Applikationsverfahrens aufgebracht wird und/oder dass die Folie (F) tiefgezogen oder thermogeformt ist oder wird.

15. Verfahren nach Anspruch 14, **dadurch gekennzeichnet, dass** die Folie (F) vor dem Verfahrensschritt II tiefgezogen oder thermogeformt wird.

16. Formteil aus einem mit einer mehrschichtigen Folie versehenen Kunststoffmaterial (KM), **dadurch gekennzeichnet, dass** das Kunststoffmaterial (KM) mit einer Folie (F) nach einem der Ansprüche 2 bis 13 versehen ist.

17. Verwendung der nach einem Verfahren nach einem der Ansprüche 1 oder 3 bis 15 hergestellten Formteile als Karosserieinnen- oder - außenbauteile oder als Bauteile für den Schiff- und Flugzeugbau oder als Bauteile für Haushalts- und Elektrogeräte.

## Claims

1. Process for producing mouldings, especially for use in automobile construction, in which
I. a sheet (F) bearing a coating (B) is produced by applying, to an optionally pretreated surface (T1) of a thermoplastic support sheet (T)
1. a pigmented coating composition (P) and
2. a crosslinkable coating composition (K) which comprises a free-radically crosslinkable component (KK) and which after crosslinking to completion gives a transparent coating (KE),
3. the coating composition (K) applied in stage 2 is dried and/or partially crosslinked to give a coating (KT) as yet not crosslinked to completion,
II. the sheet (F) produced in stage I. is inserted into an opened mould,
III. the mould is closed, the side (T2) of the thermoplastic support sheet (T) not facing the surface (T1) is contacted with a liquid or softened polymeric material (KM), and the polymeric material is caused to solidify,
IV. the moulding obtained in stage III. is removed from the mould, and
V. the coating (KT) is crosslinked to completion at any point in time in the course of the process,
the crosslinkable coating composition (K) comprising a free-radically crosslinkable component (KK) which
(i) comprises one or more oligo- and/or one or more polyurethane (meth)acrylates and
(ii) contains on average more than 1 ethylenically unsaturated double bond per molecule,
(iii) has a number-average molecular weight of from 1000 to 10 000 g/mol,
(iv) has a double bond content of from 1.0 to 5.0 mol of double bonds per 1000 g of reactive component (KK),
(v) contains on average per molecule > 1 branching point,
(vi) contains 5% - 50% by weight, based in each case on the weight of component (KK), of cyclic structural elements, and
(vii) contains at least one aliphatic structural element having at least 6 carbon atoms in the chain,
**characterized in that**
the free-radically crosslinkable component (KK) comprises hydrogen bond forming structural elements in an amount such that
1. a transparent coating (MT) produced from the mixture (M) but as yet not crosslinked to completion has a ratio of storage modulus G(MT)' to loss modulus G(MT)" of from 5 to 200, G(MT)' and G(MT) " having been measured at a temperature of 20°C by rheological oscillation measurements using a plate/plate measuring system with a heating rate of 2°C per minute and a circular frequency of 10 s⁻¹, and
2. a transparent coating (ME) produced from the mixture (M) and crosslinked to completion has a storage modulus E(ME)' of from 1.0 * 10^{7.0} to 8.0 * 10^{7.0} Pa, E(ME)' having been measured in the rubber-elastic range on free, completely crosslinked films having a layer thickness of 40 µm +/- 10 µm by means of dynamic mechanical thermoanalysis with a heating rate of 2°C per minute and a frequency of 1 Hz,
the mixture (M) being obtained by mixing 100 parts of component (KK), at 70% in methyl ethyl ketone (corresponding to 143 parts of the 70% strength solution), with 2.4 parts of 1-hydroxycyclohexyl phenyl ketone (used in the form of 3-0 parts of an 80% strength solution in acetone) and 0.8 part of ethyl 2,4,6-trimethylbenzoylphenylphosphinate and also 1.0 part of a mixture of bis(1,2,2,6,6-pentamethyl-4-piperidinyl) sebacate and methyl (1;2,2,6,6-pentamethyl-4-piperidinyl)sebacate, 2.0 parts of a mixture of 2-(4-((2-hydroxy-3-tridecyloxypropyl)oxy)-2-hydroxyphenyl)-4,6-bis(2,4-dimethylphenyl)-1,3,5-triazine and 2-(4-((2-hydroxy-3-dodecyloxypropyl)oxy)-2-hydroxyphenyl)-4,6-bis(2,4-dimethylphenyl)-1,3,5-triazine (used in the form of 2.4 parts of an 85% strength solution in 1-methoxy-2-propanol), 0.2 part of a polyether-modified polydimethylsiloxane (used in the form of 1.7 parts of a commercially customary solution in 7/2 xylene/monophenyl glycol, having a nonvolatiles fraction of 12.5%) and 70 parts of 3-butoxy-2-propanol.

2. Sheet (F) comprising a coating (B) producible by applying, to an optionally pretreated surface (T1) of a thermoplastic support sheet (T)
1. a pigmented coating composition (P) and
2. a crosslinkable coating composition (K) which comprises a free-radically crosslinkable component (KK) and which after crosslinking to completion gives a transparent coating (KE),
3. the coating composition (K) is dried to give a transparent coating (KT) as yet not crosslinked to completion,
the crosslinkable coating composition (K) comprising a free-radically crosslinkable component (KK) which
(i) comprises one or more oligo- and/or one or more polyurethane (meth)acrylates and
(ii) contains on average more than 1 ethylenically unsaturated double bond per molecule,
(iii) has a number-average molecular weight of from 1000 to 10 000 g/mol,
(iv) has a double bond content of from 1.0 to 5.0 mol of double bonds per 1000 g of reactive component (KK),
(v) contains on average per molecule > branching point,
(vi) contains 5% - 50% by weight, based in each case on the weight of component (KK), of cyclic structural elements, and
(vii) contains at least one aliphatic structural element having at least 6 carbon atoms in the chain,
**characterized in that**
the free-radically crosslinkable component (KK) comprises hydrogen bond forming structural elements in an amount such that
1. a transparent coating (MT) produced from the mixture (M) but as yet not crosslinked to completion has a ratio of storage modulus G(MT)' to loss modulus G(MT)" of from 5 to 200, G(MT)' and G(MT)" having been measured at a temperature of 20°c by rheological oscillation measurements using a plate/plate measuring system with a heating rate of 2°C per minute and a circular frequency of 10 s⁻¹, and
2. a transparent coating (ME) produced from the mixture (M) and crosslinked to completion has a storage modulus E(ME)' of from 1.0 * 10^{7.0} to 8.0 * 10^{7.0} Pa, E(ME)' having been measured in the rubber-elastic range on free, completely crosslinked films having a layer thickness of 40 µm +/- 10 µm by means of dynamic mechanical thermoanalysis with a heating rate of 2°C per minute and a frequency of 1 Hz,
the mixture (M) being obtained by mixing 100 parts of component (KK), at 70% in methyl ethyl ketone (corresponding to 143 parts of the 70% strength solution), with 2.4 parts of 1-hydroxycyclohexyl phenyl ketone (used in the form of 3.0 parts of an 80% strength solution in acetone) and 0.8 part of ethyl 2,4,6-trimethylbenzoylphenylphosphinate and also 1.0 part of a mixture of bis(1,2,2,6,6-pentamethyl-9-piperidinyl) sebacate and methyl (1,2,2,6,6-pentamethyl-4-piperidinyl)sebacate, 2.0 parts of a mixture of 2-(4-((2-hydroxy-3-tridecyloxypropyl)oxy)-2-hydroxyphenyl)-4,6-bis(2,4-dimethylphenyl)-1,3,5-triazine and 2-(4-((2-hydroxy-3-dodecyloxypropyl)oxy)-2-hydroxyphenyl)-4,6-bis(2,4-dimethylphenyl)-1,3,5-triazine (used in the form of 2.4 parts of an 85% strength solution in 1-methoxy-2-propanol), 0.2 part of a polyether-modified polydimethylsiloxane (used in the form of 1.7 parts of a commercially customary solution in 7/2 xylene/monophenyl glycol, having a nonvolatiles fraction of 12.5%) and 70 parts of 3-butoxy-2-propanol.

3. Process according to Claim 1 or sheet according to Claim 2, **characterized in that** the free-radically crosslinkable component (KK) comprises at least one hydrogen bond forming structural unit selected from the group consisting of urethane, biuret, allophanate, urea, carbamate, carbonate, amide, ether, ester, OH, COOH and/or ionic groups and/or ion-forming groups, preferably at least one urethane group together with at least one hydrogen bond forming structural unit selected from the group cf allophanate groups and/or biuret groups and/or carbamate groups and/or amide groups and/or urea groups.

4. Process according to either of Claims 1 and 3 or sheet according to either of Claims 2 and 3, **characterized in that** the free-radically crosslinkable component (KK) contains more than 2 to 10.0 double bonds per molecule and/or **in that** the free-radically crosslinkable component (KK) further comprises aliphatic structural elements having 4 and/or 5 carbon atoms in the chain.

5. Process according to any one of Claims 1, 3 and 4 or sheet according to any one of Claims 2 to 4, **characterized in that** the free-radically crosslinkable component (KK) comprises, as cyclic structural elements, monocyclic structural elements having 4 to 6 ring members and/or dicyclic and/or tricyclic and/or polycyclic structural elements having 7 to 18 ring members and/or **in that** the cyclic structural elements are substituted.

6. Process according to any one of Claims 1 and 3 to 5 or sheet according to any one of Claims 2 to 5, **characterized in that** the free-radically crosslinkable component (KK) comprises as cyclic structural elements
(i) cycloaliphatic structural elements and/or
(ii) heterocyclic structural elements, especially heterocyclic structural elements in which the number of heteroatoms per ring is 1 to 8 and/or in which the heteroatoms are selected from the group nitrogen and/or oxygen and/or sulfur,
and/or
(iii) aromatic structural elements,
the amount of aromatic structural elements preferably being not more than 10% by weight, based in each case on the weight of component (KK).

7. Process according to any one of Claims 1 and 3 to 6 or sheet according to any one of Claims 2 to 6, **characterized in that** the free-radically crosslinkable component (KK) comprises, as cyclic structural elements, tricyclodecane rings and/or cyclohexane rings and/or isocyanurate rings and/or triazine rings, it being possible for the cyclic structural elements to be substituted if appropriate.

8. Process according to any one of Claims 1 and 3 to 7 or sheet according to any one of Claims 2 to 7, **characterized in that** the free-radically crosslinkable component (KK) comprises, as aliphatic structural element having at least 6 carbon atoms in the chain, aliphatic structural elements having 6 to 18 carbon atoms in the chain, especially hexamethylene chains.

9. process according to any one of Claims 1 and 3 to 8 or sheet according to any one of Claims 2 to 8, **characterized in that** the branching points of the free-radically crosslinkable component (KK) are introduced via the use of isocyanates having a functionality of more than 2 and/or via the use of isocyanurate rings in the synthesis of component (KK).

10. Process according to any one of Claims 1 and 3 to 9 or sheet according to any one of Claims 2 to 9, **characterized in that** the free-radically crosslinkable component (KK) has been prepared using hexamethylene diisocyanate and/or isophorone diisocyanate and/or methylenebis(4-isocyanatocyclohexane) and/or the corresponding isocyanurates and/or biurets and/or allophanates of these isocyanates and/or using hydroxyethyl acrylate and/or 4-hydroxybutyl acrylate and/or pentaerythrityl triacrylate and/or isopropylidenedicyclohexanol.

11. Process according to any one of Claims 1 and 3 to 10 or sheet according to any one of Claims 2 to 10, **characterized in that** the free-radically crosslinkable component (KK) contains less than 5%, preferably less than 1%, by weight, based in each case on the weight of component (KK), of detectable free isocyanate groups, and in particular contains substantially no such isocyanate groups.

12. Process according to any one of Claims 1 and 3 to 11 or sheet according to any one of Claims 2 to 11, **characterized in that** a solventborne or aqueous coating composition is used as pigmented coating composition (P).

13. Process according to any one of Claims 1 and 3 to 12 or sheet according to any one of Claims 2 to 12, **characterized in that** the pigmented coating composition (P) comprises
(I) one or more solvents and/or water,
(II) one or more binders, preferably one or more polyurethane resins and/or one or more acrylate resins, and
(III) optionally at least one crosslinking agent,
(IV) at least one pigment, and
(V) optionally one or more customary auxiliaries and additives.

14. Process according to any one of Claims 1 and 3 to 13, **characterized in that** the pigmented coating composition is applied either in only one layer by means of a nondirected application method or in two or more layers, in which case the last of these layers is applied by means of a nondirected application method, and/or **in that** the sheet (F) has been or is thermoformed.

15. Process according to Claim 14, **characterized in that** the sheet (F) is thermoformed before process step II.

16. Moulding comprising a polymeric material (KM) provided with a multilayer sheet, **characterized in that** the polymeric material (KM) has been provided with a sheet (F) according to any one of Claims 2 to 13.

17. Use of the mouldings produced by a process according to any one of Claims 1 and 3 to 15 as interior or exterior bodywork components or as components for shipbuilding or aircraft construction or as components for household or electrical appliances.

## Revendications

1. Procédé pour la fabrication de pièces façonnées, en particulier pour une utilisation dans la construction automobile, dans lequel
I. on fabrique une feuille (F) présentant un revêtement (B), en ce que, sur une surface (T1) le cas échéant prétraitée d'une feuille support (T) thermoplastique,
1. un agent de revêtement (P) pigmenté est appliqué,
2. un agent de revêtement (K) réticulable qui contient une composant (KK) réticulable par voie radicalaire et qui résulte après la réticulation totale en un revêtement transparent (KE) est appliqué,
3. l'agent de revêtement (K) appliqué dans l'étape 2 est séché et/ou partiellement réticulé, suite à quoi on obtient un revêtement (KT) pas encore totalement réticulé,
II. la feuille (F) fabriquée dans l'étape I. est placée dans un outil ouvert,
III. l'outil est fermé, la face (T2) opposée à la surface (T1) de la feuille support (T) thermoplastique est amenée en contact avec un matériau synthétique (KM) liquide ou ramolli et on laisse le matériau synthétique se solidifier,
IV. la pièce façonnée obtenue dans l'étape III. est prélevée de l'outil et
V. le revêtement (KT) est totalement réticulé à un moment quelconque au cours du procédé,
l'agent de revêtement (K) réticulable contenant un composant (KK) réticulable par voie radicalaire, qui
(i) contient un ou plusieurs oligo-uréthane-(méth)acrylates et/ou un ou plusieurs polyuréthane-(méth)acrylates et
(ii) présente en moyenne plus d'une double liaisons éthyléniquement insaturée par molécule,
(iii) présente un poids moléculaire numérique moyen de 1000 à 10 000 g/mole,
(iv) présente une teneur en doubles liaisons de 1,0 à 5,0 moles de doubles liaisons par 1000 g de composant réactif (KK),
(v) présente en moyenne, par molécule, > 1 point de ramification,
(vi) présente 5-50% en poids, à chaque fois par rapport au poids du composant (KK), d'éléments de structure cycliques et
(vii) présente au moins un élément de structure aliphatique comprenant au moins 6 atomes de carbone dans la chaîne
**caractérisé en ce que** le composant (KK) réticulable par voie radicalaire présente des éléments de structure formant des ponts H en une quantité telle que
1. un revêtement (MT) transparent, préparé à partir du mélange (M), non encore totalement réticulé présente un rapport du module d'accumulation G(MT)' au module de perte G(MT)" de 5 à 200, où G(MT)' et G(MT)" ont été mesurés à une température de 20°C par des mesures d'oscillation rhéologiques à l'aide d'un système de mesure plaque-plaque à une vitesse de chauffage de 2°C par minute et une fréquence de cycle de 10 s⁻¹, et
2. un revêtement (ME) transparent, préparé à partir du mélange (M), totalement réticulé présente un module d'accumulation E(ME)' de 1, 0 10^{7,0} à 8,0 * 10^{7,0} Pa, où E(ME)' a été mesuré dans la plage élastique caoutchouteuse sur des films totalement réticulés libres présentant une épaisseur de couche de 40 µm +/- 10 µm par thermoanalyse dynamique-mécanique à une vitesse de chauffage de 2°C par minute et une fréquence de 1 Hz,
le mélange (M) ayant été préparé par mélange de 100 parties du composant (KK), à 70% dans de la méthyléthylcétone (correspondant à 143 parties de la solution à 70%), avec 2,4 parties de 1-hydroxycyclohexylphénylcétone (utilisée sous forme de 3,0 parties d'une solution à 80% dans de l'acétone) et 0,8 partie d'éthyl-2,4,6-triméthylbenzoylphénylphosphinate ainsi que 1,0 partie d'un mélange de sébacate de bis(1,2,2,6,6-pentaméthyl-4-pipéridinyle) et de sébacate de méthyl(1,2,2,6,6-pentaméthyl-4-pipéridinyle), 2,0 parties d'un mélange de 2-(4-((2-hydroxy-3-tridécyloxypropyl)oxy)-2-hydroxyphényl)-4,6-bis(2,4-diméthylphényl)-1,3,5-triazine et de 2-(4-((2-hydroxy-3-dodécyloxypropyl)oxy)-2-hydroxyphényl)-4,6-bis(2,4-diméthylphényl)-1,3,5-triazine (utilisé sous forme de 2,4 parties d'une solution à 85% dans du 1-méthoxy-2-propanol), 0,2 partie d'un polydiméthylsiloxane modifié par polyéther (utilisé sous forme de 1,7 partie d'une solution usuelle du commerce dans un mélange xylène/monophénylglycol 7/2 avec une proportion non volatile de 12,5%) et 70 parties de 3-butoxy-2-propanol.

2. Feuille (F) présentant un revêtement (B) pouvant être fabriquée en ce que, sur une surface (T1) le cas échéant prétraitée d'une feuille support (T) thermoplastique,
1. un agent de revêtement (P) pigmenté est appliqué,
2. un agent de revêtement (K) réticulable qui contient un composant (KK) réticulable par voie radicalaire et qui résulte après la réticulation totale en un revêtement transparent (KE) est appliqué,
3. l'agent de revêtement (K) est séché en un revêtement (KT) transparent, mais non encore totalement réticulé,
l'agent de revêtement (K) réticulable contenant un composant (KK) réticulable par voie radicalaire, qui
(i) contient un ou plusieurs oligo-uréthane-(méth)acrylates et/ou un ou plusieurs polyuréthane-(méth)acrylates et
(ii) présente en moyenne plus d'une double liaisons éthyléniquement insaturée par molécule,
(iii) présente un poids moléculaire numérique moyen de 1000 à 10 000 g/mole,
(iv) présente une teneur en doubles liaisons de 1,0 à à 5,0 moles de doubles liaisons par 1000 g de composant réactif (KK),
(v) présente en moyenne, par molécule, > 1 point de ramification,
(vi) présente 5-50% en poids, à chaque fois par rapport au poids du composant (KK), d'éléments de structure cycliques et
(vii) présente au moins un élément de structure aliphatique comprenant au moins 6 atomes de carbone dans la chaîne
**caractérisée en ce que** le composant (KK) réticulable par voie radicalaire présente des éléments de structure formant des ponts H en une quantité telle que
1. un revêtement (MT) transparent, préparé à partir du mélange (M), non encore totalement réticulé présente un rapport du module d'accumulation G(MT)' au module de perte G(MT)" de 5 à 200, où G(MT)' et G(MT)" ont été mesurés à une température de 20°C par des mesures d'oscillation rhéologiques à l'aide d'un système de mesure plaque-plaque à une vitesse de chauffage de 20°C par minute et une fréquence de cycle de 10 s⁻¹, et
2. un revêtement (ME) transparent, préparé à partir du mélange (M), totalement réticulé présente un module d'accumulation E(ME)' de 1,0 * 10^{7,0} à 8,0 * 10 ^{7,0} Pa, où E(ME)' a été mesuré dans la plage élastique caoutchouteuse sur des films totalement réticulés libres présentant une épaisseur de couche de 40 µm +/- 10 µm par thermoanalyse dynamique-mécanique à une vitesse de chauffage de 2°C par minute et une fréquence de 1 Hz,
le mélange (M) ayant été préparé par mélange de 100 parties du composant (KK), à 70% dans de la méthyléthylcétone (correspondant à 143 parties de la solution à 70%), avec 2,4 parties de 1-hydroxycyclohexylphénylcétone (utilisée sous forme de 3,0 parties d'une solution à 80% dans de l'acétone) et 0,8 partie d'éthyl-2,4,6-triméthylbenzoylphénylphosphinate ainsi que 1,0 partie d'un mélange de sébacate de bis(1,2,2,6,6-pentaméthyl-4-pipéridinyle) et de sébacate de méthyl(1,2,2,6,6-pentaméthyl-4-pipéridinyle), 2,0 parties d'un mélange de 2-(4-((2-hydroxy-3-tridécyloxypropyl)oxy)-2-hydroxyphényl)-4,6-bis(2,4-diméthylphényl)-1,3,5-triazine et de 2-(4-((2-hydroxy-3-dodécyloxypropyl)oxy)-2-hydroxyphényl)-4,6-bis(2,4-diméthylphényl)-1,3,5-triazine (utilisé sous forme de 2,4 parties d'une solution à 85% dans du 1-méthoxy-2-propanol), 0,2 partie d'un polydiméthylsiloxane modifié par polyéther (utilisé sous forme de 1,7 partie d'une solution usuelle du commerce dans un mélange xylène/monophénylglycol 7/2 avec une proportion non volatile de 12,5%) et 70 parties de 3-butoxy-2-propanol.

3. Procédé selon la revendication 1 ou feuille selon la revendication 2, **caractérisé**(e) en ce que le composant (KK) réticulable par voie radicalaire contient au moins une unité de structure formant des ponts H choisie dans le groupe formé par les groupes uréthane, biuret, allophanate, urée, carbamate, carbonate, amide, éther, ester, OH, COOH, et/ou des groupes ioniques et/ou formant des ions, de préférence au moins un groupe uréthane ensemble avec au moins une unité de structure formant des ponts H choisie dans le groupe formé par les groupes allophanate et/ou biuret et/ou carbamate et/ou amide et/ou urée.

4. Procédé selon l'une quelconque des revendications 1 ou 3 ou feuille selon l'une quelconque des revendications 2 ou 3, **caractérisé**(e) en ce que le composant (KK) réticulable par voie radicalaire présente plus de 2 à 10,0 doubles liaisons par molécule et/ou en ce que le composant (KK) réticulable par voie radicalaire présente en outre des éléments de structure aliphatiques comprenant 4 et/ou 5 atomes de carbone dans la chaîne.

5. Procédé selon l'une quelconque des revendications 1 ou 3 à 4 ou feuille selon l'une quelconque des revendications 2 à 4, **caractérisé** (e) en ce que le composant (KK) réticulable par voie radicalaire présente, comme éléments de structure cycliques, des éléments de structure monocycliques comprenant 4 à 8 chaînons de cycle et/ou des éléments de structure dicycliques et/ou tricycliques et/ou polycycliques comprenant 7 à 18 chaînons de cycle et/ou en ce que les éléments de structure cycliques sont substitués.

6. Procédé selon l'une quelconque des revendications 1 ou 3 à 5 ou feuille selon l'une quelconque des revendications 2 à 5, **caractérisé**(e) en ce que le composant (KK) réticulable par voie radicalaire présente, comme éléments de structure cycliques,
(i) des éléments de structure cycloaliphatiques et/ou
(ii) des éléments de structure hétérocycliques, en particulier des éléments de structure hétérocycliques dans lesquels le nombre d'hétéroatomes par cycle est de 1 à 8 et/ou dans lesquels les hétéroatomes sont choisis dans le groupe formé par l'azote et/ou l'oxygène et/ou le soufre, et/ou
(iii) des éléments de structure aromatiques où la teneur en éléments de structure aromatiques est de préférence d'au maximum 10% en poids, à chaque fois par rapport au poids du composant (KK).

7. Procédé selon l'une quelconque des revendications 1 ou 3 à 6 ou feuille selon l'une quelconque des revendications 2 à 6, **caractérisé**(e) en ce que le composant (KK) réticulable par voie radicalaire présente, comme éléments de structure cycliques, des cycles de tricyclodécane et/ou des cycles de cyclohexane et/ou des cycles isocyanurate et/ou des cycles triazine, les éléments de structure cycliques pouvant le cas échéant être substitués.

8. Procédé selon l'une quelconque des revendications 1 ou 3 à 7 ou feuille selon l'une quelconque des revendications 2 à 7, **caractérisé**(e) en ce que le composant (KK) réticulable par voie radicalaire présente comme élément de structure aliphatique comprenant au moins 6 atomes de carbone dans la chaîne, des éléments de structure aliphatiques comprenant 6 à 18 atomes de carbone dans la chaîne, en particulier des chaînes d'hexaméthylène.

9. Procédé selon l'une quelconque des revendications 1 ou 3 à 8 ou feuille selon l'une quelconque des revendications 2 à 8, **caractérisé**(e) en ce que les points de ramification du composant (KK) réticulable par voie radicalaire sont introduits via l'utilisation d'isocyanates présentant une fonctionnalité supérieure à 2 et/ou via l'utilisation de cycles isocyanurate lors de la formation du composant (KK).

10. Procédé selon l'une quelconque des revendications 1 ou 3 à 9 ou feuille selon l'une quelconque des revendications 2 à 9, **caractérisé**(e) en ce que le composant (KK) réticulable par voie radicalaire a été préparé en utilisant de l'hexaméthylènediisocyanate et/ou de l'isophoronediisocyanate et/ou du méthylènebis-(4-isocyanatocyclohexane) et/ou les isocyanurates correspondants et/ou les biurets et/ou allophanates de ces isocyanates et/ou en utilisant de l'acrylate d'hydroxyéthyle et/ou de l'acrylate de 4-hydroxybutyle et/ou du triacrylate de pentaérythritol et/ou de l'isopropylidènedicyclohexanol.

11. Procédé selon l'une quelconque des revendications 1 ou 3 à 10 ou feuille selon l'une quelconque des revendications 2 à 10, **caractérisé**(e) en ce que le composant (KK) réticulable par voie radicalaire présente moins de 5% en poids, de préférence moins de 1% en poids, à chaque fois par rapport au poids du composant (KK), et ne présente en particulier essentiellement pas de groupes isocyanate libres détectables.

12. Procédé selon l'une quelconque des revendications 1 ou 3 à 11 ou feuille selon l'une quelconque des revendications 2 à 11, **caractérisé**(e) en ce qu'on utilise comme agent de revêtement (P) pigmenté un agent de revêtement contenant un solvant ou aqueux.

13. Procédé selon l'une quelconque des revendications 1 ou 3 à 12 ou feuille selon l'une quelconque des revendications 2 à 12, **caractérisé**(e) en ce que l'agent de revêtement (P) pigmenté contient
(I) un ou plusieurs solvants et/ou de l'eau
(II) un ou plusieurs liants, de préférence une ou plusieurs résines de polyuréthane et/ou une ou plusieurs résines d'acrylate et
(III) le cas échéant au moins un réticulant,
(IV) au moins un pigment ainsi que
(V) le cas échéant un ou plusieurs adjuvants et additifs usuels.

14. Procédé selon l'une quelconque des revendications 1 ou 3 à 13, **caractérisé en ce que** l'agent de revêtement pigmenté est appliqué soit en seulement une couche au moyen d'un procédé d'application non orienté, soit en 2 couches ou plus, la dernière de ces couches étant alors appliquée au moyen d'un procédé d'application non orienté et/ou **en ce que** la feuille (F) a subi ou subit un emboutissage profond ou a été ou est thermoformée.

15. Procédé selon la revendication 14, **caractérisé en ce que** la feuille (F) subit un emboutissage profond ou est thermoformée avant l'étape de procédé II.

16. Pièce façonnée en un matériau synthétique (KM) pourvu d'une feuille à plusieurs couches, **caractérisée en ce que** le matériau synthétique (KM) est pourvu d'une feuille (F) selon l'une quelconque des revendications 2 à 13.

17. Utilisation des pièces façonnées fabriquées selon un procédé selon l'une quelconque des revendications 1 ou 3 à 15 comme pièces intérieures ou extérieures de carrosserie ou comme pièces pour la construction de bateaux ou d'avions ou comme pièces pour les appareils domestiques et électriques.
